(19) Europäisches Patentamt

European Patent Office

Office européen des brevets

(11) **EP 4 001 318 A1**

(12) # EUROPEAN PATENT APPLICATION
published in accordance with Art. 153(4) EPC

(43) Date of publication:
**25.05.2022 Bulletin 2022/21**

(21) Application number: **20844506.4**

(22) Date of filing: **05.06.2020**

(51) International Patent Classification (IPC):
*C08F 6/22* (2006.01)     *C08F 220/18* (2006.01)
*C08L 33/08* (2006.01)     *C08F 2/26* (2006.01)
*C08K 3/013* (2018.01)

(52) Cooperative Patent Classification (CPC):
**C08F 2/26; C08F 6/22; C08F 220/18; C08K 3/013; C08L 33/08**

(86) International application number:
**PCT/JP2020/022311**

(87) International publication number:
**WO 2021/014788 (28.01.2021 Gazette 2021/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.07.2019 JP 2019134139**

(71) Applicant: **Zeon Corporation
Tokyo 100-8246 (JP)**

(72) Inventors:
• **MASUDA, Hirofumi
Tokyo 100-8246 (JP)**
• **KAWANAKA, Takafumi
Tokyo 100-8246 (JP)**

(74) Representative: **Fujimoto, Naho
Maiwald Patentanwalts- und
Rechtsanwaltsgesellschaft mbH
Elisenhof
Elisenstraße 3
80335 München (DE)**

(54) **ACRYLIC RUBBER HAVING EXCELLENT WATER RESISTANCE**

(57)     An acrylic rubber excellent in water resistance and a method for producing the same are provided. An acrylic rubber composed of: 70 to 99.9wt% of a bonding unit derived from (meth) acrylic acid ester; 0.1 to 10wt% of a bonding unit derived from a cross-linkable monomer; and if necessary, 0 to 20wt% of a bonding unit derived from another monomer, wherein the ash content is 0.5wt% or less, the total amount of magnesium and phosphorus in the ash is 30wt% or more, a ratio of the magnesium to the phosphorus ([Mg] / [P]) by weight is 0.4 to 2.5, and Mooney viscosity (ML1+4,100°C) of the rubber is 10 to 150 is particularly excellent in water resistance, and a rubber cross-linked product using the same is also excellent in physical properties.

FIG.1

EP 4 001 318 A1

**Description**

[FIELD OF THE INVENTION]

The present invention relates to an acrylic rubber, a method for producing the same, a rubber composition and a rubber cross-linked product; and more specifically relates to an acrylic rubber excellent in water resistance, a method for producing the same, a rubber composition including the acrylic rubber, and a rubber cross-linked product obtained by cross-linking the same.

Acrylic rubber is a polymer mainly composed of acrylic acid ester and is generally known as rubber excellent in heat resistance, oil resistance, and ozone resistance, and is widely used in fields related to automobiles.

For example, Patent Document 1 (International Publication WO2018/079783 Pamphlet) discloses a method for producing an acrylic rubber, in which, a monomer component consisting of ethyl acrylate, n-butyl acrylate, and mono-n-butyl fumarate is emulsified using an emulsifier consisting of pure water, sodium lauryl sulfate and polyoxyethylene dodecyl ether; emulsion polymerization is performed in the presence of a polymerization initiator up to a polymerization conversion rate of 95% by weight to obtain an emulsion polymerization solution; sodium sulfate is continuously added to produce hydrous crumbs; and subsequently, the produced hydrous crumbs are washed with industrial water 4 times, once with acidic water of pH3, and once with pure water, and then dried with a hot air dryer at 110°C for 1 hour, thereby to obtain an acrylic rubber excellent in water resistance (assessed by volume change after immersion in 80°C distilled water for 70 hours) with a small residual amount of the emulsifier and the coagulant. However, recently, acrylic rubber has been required to have higher water resistance.

On the other hand, regarding a method for producing an acrylic rubber using a phosphoric acid-based emulsifier, for example, Patent Document 2 (Japanese Patent Application Publication S50-156559) discloses an acrylic rubber having a good scorch inhibiting property and being easily curable by heating, wherein the acrylic rubber consists of 50 to 99.8% by weight of acrylate monomer, 0.1 to 15% by weight of halogen containing monomer, and 0.1 to 4% by weight of β-cyanoalkyl acrylate. To be specific, Patent Document 2 discloses a method in which p-menthane hydroperoxide is added to an emulsion liquid obtained by mixing water, a monomer and alkyl phenoxy poly (ethyleneoxy) ethyl phosphate to polymerize the emulsion liquid, and then, a polymer is isolated from the generated polymer latex, that is the polymerized emulsion, using a 2% by weight aqueous solution of magnesium sulfate, washed with hot water at 80°C three times and dried under vacuum, thereby to obtain the acrylic rubber. However, when a monovalent phosphate is used as an emulsifier, there is such a problem that stable emulsion and crumb formation are difficult in emulsion polymerization and coagulation reaction, respectively, so that a large amount of deposits occur in a polymerization tank or a coagulation tank, and it causes degrading productivity, and, as the coagulant and the emulsifier in the crumbs cannot be sufficiently reduced even by washing, it brings the result in that water resistance is inferior.

Further, Patent Document 3 (International Publication WO2018/101146 Pamphlet) discloses a method in which a monomer composed of ethyl acrylate, n-butyl acrylate, n-butyl methacrylate, and monoethyl fumarate is provided together with water and polyoxyalkylene alkyl ether phosphate as an emulsifier, then sodium ascorbate and potassium persulfate are added, and emulsion polymerization is performed under normal pressure and normal temperature, and then generated emulsion-polymerized liquid is coagulated with an aqueous sodium sulfate solution, washed with water, and dried, thereby to produce an acrylic rubber. However, in this method to produce the acrylic rubber, there is a problem that stable emulsion and crumb formation are difficult in emulsion polymerization and coagulation reaction, so that a large amount of deposits occur in a polymerization tank or a coagulation tank, thereby degrading productivity, and even if after washing of the coagulated crumb, due to insufficient reduction of coagulant and emulsifier by washing, it results in poor water resistance.

Further, Patent Document 4 (Japanese Patent No. 3949975) discloses that, in a method for producing a polymer latex, that is, emulsion polymerization liquid, containing a total of 80% by mass or more of a methacrylic acid alkyl ester, an acrylic acid alkyl ester or an aromatic vinyl compound by emulsion polymerization, a mixture of sodium mono-isotridecyloxyhexaoxyethylene phosphate, sodium diisotridecyloxyhexaoxyethylene phosphate and isotridecyloxypentaoxyethyleneoxyethanol, or a mixture of sodium mono-n-dodecyloxyhexaoxyethylene phosphate and dodecyloxypentaoxyethyleneoxyethanol is used as an emulsifier; and that, as a coagulant used to collect the polymer from the above latex, it is preferable to use an aqueous solution of calcium acetate, but an aqueous solution of magnesium sulfate can also be used; and that the polymer obtained by this method is useful as an additive for various thermoplastic resins such as ABS resin. However, Patent Document 4 does not specifically describe acrylic rubber, and does not suggest any means for improving performance (especially, water resistance) of acrylic rubber.

[CITATION LIST]

[PATENT LITERATURE]

[Patent Document 1] International Publication WO2018/079783 Pamphlet
[Patent Document 2] Japanese Patent Application Publication S50-156559
[Patent Document 3] International Publication WO2018/101146 Pamphlet
[Patent Document 4] Japanese Patent No. 3949975

[SUMMARY OF THE INVENTION]

[TECHNICAL PROBLEM]

The present invention has been made considering the actual situation of the prior art, and the present invention is aimed to provide an acrylic rubber highly excellent in water resistance, a method for producing the same, a rubber composition including the acrylic rubber, and a rubber cross-linked product obtained by cross-linking the rubber composition.

[MEANS TO SOLVE THE PROBLEM]

As a result of diligent studies conducted by the present inventors to solve the above problems, the present inventors have found out that an acrylic rubber, composed of a specific structural monomer unit containing a (meth) acrylic ester and a cross-linkable monomer, having a specific range of ash content contained in the rubber, containing a specific amount of magnesium and phosphorus in the ash, and having a ratio of the two substances in the specific range, is remarkably excellent in performance of water resistance and the like.

The present inventors have also found out that acrylic rubber with excellent water resistance can be easily obtained by emulsifying a specific monomer component with a specific phosphoric acid-based emulsifier, followed by emulsion polymerization, and then coagulating the resulting emulsion polymerization solution with a specific coagulant and washing and drying.

The present inventors have also found out that crumb diameter of the generated hydrous crumbs can be controlled by means of crumb diameter distribution with high removal efficiency of emulsifier and coagulant in the washing and dehydration process can be realized, and an acrylic rubber with further improved water resistance can be produced, by using a specific contacting method of the emulsion polymerization liquid and the coagulant in the coagulation reaction, or specifying the stirring speed, peripheral speed and concentration of the coagulant aqueous solution.

The present inventors have conducted research based on these findings and completed the present invention.

Thus, according to the present invention, an acrylic rubber particularly excellent in water resistance is provided, wherein the acrylic rubber contains: a bonding unit derived from at least one (meth) acrylic acid ester selected from the group consisting of (meth) acrylic acid alkyl ester and (meth) acrylic acid alkoxyalkyl ester in the amount of 70 to 99.9% by weight; a bonding unit derived from a reactive monomer in the amount of 0.1 to 10% by weight; and a bonding unit derived from another monomer in the amount of 0 to 20% by weight, wherein ash content is 0.5% by weight or less, a total amount of magnesium and phosphorus in the ash is 30% by weight or more with respect to the total ash content, a ratio of the magnesium to the phosphorus ([Mg] / [P]) by weight is in the range of 0.4 to 2.5, and a Mooney viscosity (ML1+4,100°C) of the rubber is 10 to 150.

In the acrylic rubber according to the present invention, the ash content is preferably 0.0001 to 0.4% by weight.

In the acrylic rubber according to the present invention, a ratio of the magnesium to the phosphorus ([Mg] / [P]) in the ash is in the range of 0.45 to 1.2.

In the acrylic rubber according to the present invention, a glass transition temperature (Tg) is preferably 20°C or less.

In the acrylic rubber according to the present invention, a complex viscosity ([η] 60°C) at 60°C is preferably 15,000 Pa·s or less.

In the acrylic rubber according to the present invention, a ratio ([η] 100°C / [η] 60°C) of the complex viscosity ([η] 100°C) at 100°C to the complex viscosity ([η] 60°C) at 60°C is preferably 0.5 or more.

In the acrylic rubber according to the present invention, a ratio ([η] 100°C / [η] 60°C) of the complex viscosity ([η] 100°C) at 100°C to the complex viscosity ([η] 60°C) at 60°C is more preferably 0.8 or more.

In the acrylic rubber according to the present invention, the amount of gel insoluble in methyl ethyl ketone is preferably 50% by weight or less.

In the acrylic rubber according to the present invention, the amount of gel insoluble in methyl ethyl ketone is more preferably 10% by weight or less.

In the acrylic rubber according to the present invention, a water content is preferably less than 1% by weight.

In the acrylic rubber according to the present invention, pH is preferably 6 or less.

In the acrylic rubber according to the present invention, the acrylic rubber is preferably sheet-shaped or bale-shaped.

In the acrylic rubber according to the present invention, specific gravity is preferably 0.8 or more.

Further, according to the present invention, there is provided a method for producing an acrylic rubber, wherein the method comprises: an emulsion polymerization process to obtain an emulsion polymerization liquid by emulsifying, with water and a divalent phosphate ester salt, a monomer component containing at least one (meth) acrylic acid ester selected from the group consisting of (meth) acrylic acid alkyl ester and (meth) acrylic acid alkoxyalkyl ester, a reactive monomer, and other copolymerizable monomer as necessary, and by emulsion-polymerizing the emulsified monomer liquid in the presence of a polymerization catalyst; a coagulation process to generate hydrous crumbs by adding the obtained emulsion polymerization liquid into an aqueous solution of a magnesium salt being stirred; a washing process to wash the generated hydrous crumbs with hot water; and a drying process to dry the washed hydrous crumbs.

In the method for producing an acrylic rubber according to the present invention, it is preferable that the method further comprises a dehydration process, after the washing process, to dehydrate the washed hydrous crumbs to the water content 1 to 50% by weight.

In the method for producing an acrylic rubber according to the present invention, the water content of the hydrous crumbs after the dehydration is preferably in the range of 3 to 40% by weight.

Further, in the method for producing an acrylic rubber according to the present invention, a rotation speed of the magnesium salt aqueous solution being stirred is preferably 100 rpm or higher. And a peripheral speed of the magnesium salt aqueous solution being stirred is preferably 0.5 m/s or higher. Further, a peripheral speed of the magnesium salt aqueous solution being stirred is more preferably 1.5 m/s or higher. Further, a magnesium salt concentration of the magnesium salt aqueous solution used as a coagulant is preferably 0.5% by weight or more.

In the method for producing an acrylic rubber according to the present invention, sizes of the hydrous crumbs produced in the coagulation process further preferably satisfy the following (a) to (e):

(a) the proportion of the hydrous crumbs that do not pass through a JIS sieve having a mesh opening of 9.5 mm is 10% by weight or less;
(b) the proportion of the hydrous crumbs that pass through the JIS sieve having a mesh opening of 9.5 mm and do not pass through a JIS sieve having a mesh opening of 6.7 mm is 30% by weight or less;
(c) the proportion of the hydrous crumbs that pass through the JIS sieve having a mesh opening of 6.7 mm and do not pass through a JIS sieve having a mesh opening of 710 $\mu$m is 20% by weight or more;
(d) the proportion of the hydrous crumbs that pass through the JIS sieve having a mesh opening of 710 $\mu$m and do not pass through a JIS sieve having a mesh opening of 425 $\mu$m is 30% by weight or less; and
(e) the proportion of the hydrous crumbs that pass through the JIS sieve having a mesh opening of 425 $\mu$m is 10% by weight or less.

In the method for producing an acrylic rubber according to the present invention, it is preferable that, the dehydration process and the drying process are performed, with a screw-type extruder provided with a dehydration barrel having a dehydration slit, a drying barrel for drying under reduced pressure, and a die at a tip thereof, by dehydrating the hydrous crumbs at the dehydration barrel until the water content is 1 to 40% by weight; thereafter drying the hydrous crumbs at the drying barrel until the water content is 1% by weight or less; and then extruding the dry rubber from the die.

According to the present invention, a rubber composition containing a rubber component including the above-mentioned acrylic rubber, a filler, and a cross-linking agent is provided. Further, according to the present invention, a rubber cross-linked product obtained by cross-linking the above-mentioned rubber composition is provided.

[EFFECT OF THE INVENTION]

According to the present invention, an acrylic rubber excellent in water resistance, an efficient method for producing the same, a high quality rubber composition containing the acrylic rubber, and a rubber cross-linked product obtained by cross-linking the above-mentioned rubber composition are provided.

[BRIEF DESCRIPTION OF THE DRAWINGS]

FIG. 1 is a diagram schematically showing an example of an acrylic rubber production system usable for producing an acrylic rubber according to an embodiment of the present invention

FIG. 2 is a diagram showing a configuration of the screw-type extruder of FIG. 1.

[DETAILED DESCRIPTION OF EMBODIMENTS]

The acrylic rubber according to the present invention, as described above, contains: a bonding unit derived from at least one (meth) acrylic acid ester selected from the group consisting of (meth) acrylic acid alkyl ester and (meth) acrylic acid alkoxyalkyl ester in the amount of 70 to 99.9% by weight; a bonding unit derived from a reactive monomer in the amount of 0.1 to 10% by weight; and a bonding unit derived from another monomer in the amount of 0 to 20% by weight, wherein ash content is 0.5% by weight or less, a total amount of magnesium and phosphorus in the ash is 30% by weight or more with respect to the total ash content, a ratio of the magnesium to the phosphorus ($[Mg] / [P]$) by weight is in the range of 0.4 to 2.5, and a Mooney viscosity (ML1+4,100°C) of the rubber is 10 to 150.

<Monomer Component>

The acrylic rubber according to the present invention is a polymer containing at least one (meth) acrylic acid ester selected from the group consisting of (meth) acrylic acid alkyl esters and (meth) acrylic acid alkoxyalkyl esters, a reactive monomer, and a bonding unit composed of other copolymerizable monomer as necessary. In the present invention, "(meth) acrylic acid ester" is used as a general term referring the esters of acrylic acid and / or methacrylic acid.

The aforementioned (meth) acrylic acid alkyl ester is not particularly limited, but a (meth) acrylic acid alkyl ester having an alkyl group having 1 to 12 carbon atoms, preferably a (meth) acrylic acid alkyl ester having an alkyl group having 1 to 8 carbon atoms, more preferably a (meth) acrylic acid alkyl ester having an alkyl group having 2 to 6 carbon atoms, is usually used.

Specific examples of the (meth) acrylic acid alkyl ester include methyl (meth) acrylate, ethyl (meth) acrylate, n-propyl (meth) acrylate, isopropyl (meth) acrylate, and n-butyl (meth) acrylate, isobutyl (meth) acrylate, n-hexyl (meth) acrylate, 2-ethylhexyl (meth) acrylate, cyclohexyl (meth) acrylate, and the like. Among these, ethyl (meth) acrylate, and n-butyl (meth) acrylate are preferable, and ethyl acrylate and n-butyl acrylate are more preferable.

The (meth) acrylic acid alkoxyalkyl ester is not particularly limited, but a (meth) acrylic acid alkoxyalkyl ester having an alkoxyalkyl group having 2 to 12 carbon atoms, preferably a (meth) acrylic acid alkoxyalkyl ester having an alkoxyalkyl group having 2 to 8 carbon atoms, more preferably a (meth) acrylic acid alkoxyalkyl ester having an alkoxyalkyl group having 2 to 6 carbon atoms is usually used.

Specific examples of the (meth) acrylic acid alkoxyalkyl ester include methoxymethyl (meth) acrylate, methoxyethyl (meth) acrylate, methoxypropyl (meth) acrylate, methoxy butyl (meth) acrylate, ethoxymethyl (meth) acrylate, ethoxyethyl (meth) acrylate, propoxyethyl (meth) acrylate, butoxyethyl (meth) acrylate, and the like. Among these, methoxyethyl (meth) acrylate, ethoxyethyl (meth) acrylate and the like are preferable, and methoxyethyl acrylate and ethoxyethyl acrylate are more preferable.

At least one (meth) acrylic acid ester selected from the group consisting of the aforementioned (meth) acrylic acid alkyl esters and (meth) acrylic acid alkoxyalkyl esters may be used alone or in combination of two or more. The ratio of the (meth) acrylic acid ester in the entire monomer components is usually 50% by weight or more, preferably 70% by weight or more, more preferably 80% by weight or more, particularly preferably 90% by weight or more. Further, the proportion of at least one (meth) acrylic acid ester selected from the group consisting of such (meth) acrylic acid alkyl ester and (meth) acrylic acid alkoxyalkyl ester is usually 70 to 99.9% by weight, preferably 85 to 99.5% by weight, more preferably 92 to 99% by weight. If the amount of (meth) acrylic acid ester in the entire monomer components is excessively small, the weather resistance, heat resistance, and oil resistance of the resulting acrylic rubber may decrease, which is not preferable.

The reactive monomer is not particularly limited and may be appropriately selected depending on the purpose of use, but examples of the reactive monomer usually include a monomer having at least one functional group selected from the group consisting of a carboxyl group, an epoxy group and a halogen group. Among these, a monomer having at least one functional group selected from the group consisting of a carboxyl group, an epoxy group and a chlorine atom is preferable, a monomer having a carboxyl group or an epoxy group is more preferable, and a monomer having a carboxyl group is particularly preferable. As the reactive monomer, further, either an ion-reactive monomer or a radical-reactive monomer may be used, but an ion-reactive monomer such as a carboxyl group or an epoxy group is highly excellent in water resistance and preferable.

The monomer having a carboxyl group is not particularly limited, but ethylenically unsaturated carboxylic acid can be preferably used. Examples of the ethylenically unsaturated carboxylic acid include, for example, ethylenically unsaturated monocarboxylic acid, ethylenically unsaturated dicarboxylic acid, ethylenically unsaturated dicarboxylic acid monoester, and the like, and among these, ethylenically unsaturated dicarboxylic acid monoester is particularly preferable, since the said monoester can further improve the compression set resistance property when the acrylic rubber is a rubber cross-linked product.

The ethylenically unsaturated monocarboxylic acid is not particularly limited, but an ethylenically unsaturated monocarboxylic acid having 3 to 12 carbon atoms is preferable, and examples thereof include acrylic acid, methacrylic acid, α-ethylacrylic acid, crotonic acid, and cinnamic acid.

The ethylenically unsaturated dicarboxylic acid is not particularly limited, but an ethylenically unsaturated dicarboxylic acid having 4 to 12 carbon atoms is preferable, and examples thereof include: butendioic acid such as fumaric acid and maleic acid; itaconic acid; citraconic acid; and the like. It should be noted that the ethylenically unsaturated dicarboxylic acid also includes those which exist as an anhydride.

The ethylenically unsaturated dicarboxylic acid monoester as described above is not particularly limited, but is usually an ethylenically unsaturated dicarboxylic acid having 4 to 12 carbon atoms and an alkyl monoester having 1 to 12 carbon atoms, preferably an ethylenically unsaturated dicarboxylic acid having 4 to 6 carbon atoms and an alkyl monoester having 2 to 8 carbon atoms, and more preferably a butenedionic acid having 4 carbon atoms and an alkyl monoester having 2 to 6 carbon atoms.

Specific examples of the ethylenic unsaturated dicarboxylic acid monoester include: butenedione acid monoalkyl ester such as monomethyl fumarate, monoethyl fumarate, mono-n-butyl fumarate, monomethyl maleate, monoethyl maleate, mono-n-butyl maleate, monocyclopentyl fumarate, monocyclohexyl fumarate, monocyclohexenyl fumarate, monocyclopentyl maleate, monocyclohexyl maleate; and itaconic acid monoalkyl ester such as monomethyl itaconate, monoethyl itaconate, mono-n-butyl itaconate, monocyclohexyl itaconate, and the like. Among these, mono-n-butyl fumarate and mono-n-butyl maleate are preferable, and mono-n-butyl fumarate is particularly preferable.

Examples of the aforementioned epoxy group-containing monomer include: epoxy group-containing (meth) acrylic acid esters such as glycidyl (meth) acrylate; epoxy group-containing vinyl ethers such as allyl glycidyl ether and vinyl glycidyl ether; and the like.

The aforementioned halogen group of the monomer having a halogen group is not particularly limited, but is preferably the same containing a chlorine atom therein. Examples of the monomer having a halogen group include unsaturated alcohol esters of halogen containing saturated carboxylic acid, (meth) acrylic acid haloalkyl ester, (meth) acrylic acid haloacyloxyalkyl ester, (meth) acrylic acid (haloacetylcarbamoyloxy) alkyl ester, halogen containing unsaturated ether, halogen containing unsaturated ketone, halomethyl group-containing aromatic vinyl compound, halogen containing unsaturated amide, haloacetyl group-containing unsaturated monomer, and the like.

Examples of the unsaturated alcohol ester of halogen containing saturated carboxylic acids that constitute the aforementioned cross-linkable monomer include vinyl chloroacetate, vinyl 2-chloropropionate, allyl chloroacetate and the like. Examples of the (meth) acrylic acid haloalkyl ester include chloromethyl (meth) acrylate, 1-chloroethyl (meth) acrylate, 2-chloroethyl (meth) acrylate, 1,2-dichloroethyl (meth) acrylate, 2-chloropropyl (meth) acrylate, 3-chloropropyl (meth) acrylate, 2,3-dichloropropyl (meth) acrylate, and the like. Examples of the (meth) acrylic acid haloacyloxyalkyl ester include 2-(chloroacetoxy) ethyl (meth) acrylate, 2-(chloroacetoxy) propyl (meth) acrylate, 3-(chloroacetoxy) propyl (meth) acrylate), 3-(hydroxychloroacetoxy) propyl (meth) acrylate, and the like. Examples of the (meth) acrylic acid (haloacetylcarbamoyloxy) alkyl ester include 2-(chloroacetylcarbamoyloxy) ethyl (meth) acrylate, 3-(chloroacetylcarbamoyloxy) propyl (meth) acrylate, and the like. Examples of the halogen containing unsaturated ether include chloromethyl vinyl ether, 2-chloroethyl vinyl ether, 3-chloropropyl vinyl ether, 2-chloroethyl allyl ether, 3-chloropropyl allyl ether and the like. Examples of halogen containing unsaturated ketone include 2-chloroethyl vinyl ketone, 3-chloropropyl vinyl ketone, 2-chloroethyl allyl ketone, and the like. Examples of the halomethyl group-containing aromatic vinyl compound include p-chloromethylstyrene, m-chloromethylstyrene, o-chloromethylstyrene, p-chloromethyl-α-methylstyrene, and the like. Examples of the halogen containing unsaturated amide include N-chloromethyl (meth) acrylamide and the like. Examples of the haloacetyl group-containing unsaturated monomer include 3-(hydroxychloroacetoxy) propyl allyl ether, p-vinylbenzyl chloroacetic acid ester, and the like.

These reactive monomers are used alone or in combination of two or more, and the ratio in the entire monomer components is usually 0.1 to 10% by weight, preferably 0.5 to 5% by weight, more preferably 1 to 3% by weight.

As the other monomer (hereinafter simply referred to as "other monomer" in the present invention) which can be used together with each of the above monomers, there is no particular limitation as long as it is copolymerizable with the above monomer, and the examples thereof include: aromatic vinyl such as styrene, α-methylstyrene, divinylbenzene; ethylene unsaturated nitrile such as acrylonitrile and methacrylonitrile; acrylamide-based monomer such as acrylamide and methacrylamide; olefin-based monomer such as ethylene, propylene, vinyl acetate, ethyl vinyl ether and butyl vinyl ether and the like.

The other monomers described above may be used alone or in combination of two or more, and the ratio of the other monomers in the entire monomer components is usually restricted in the range of 0 to 20% by weight, preferably 0 to 10% by weight, more preferably 0 to 5% by weight.

<Acrylic Rubber>

The acrylic rubber of the present invention contains a bonding unit derived from at least one (meth) acrylic acid ester selected from the group consisting of (meth) acrylic acid alkyl ester and (meth) acrylic acid alkoxyalkyl ester; a bonding unit derived from a reactive monomer; and a bonding unit derived from other monomer contained, as required, wherein each ratio of the components in the acrylic rubber is: the bonding unit derived from the at least one (meth) acrylic acid ester selected from the group consisting of (meth) acrylic acid alkyl ester and (meth) acrylic acid alkoxyalkyl ester, which is the main component, is in the range of 70 to 99.9% by weight, preferably 85 to 99.5% by weight, more preferably 92 to 99% by weight; the bonding unit derived from the reactive monomer is in the range of 0.1 to 10% by weight, preferably 0.5 to 5% by weight, more preferably 1 to 3% by weight; and the bonding unit derived from other monomer is in the range of 0 to 20% by weight, preferably 0 to 10% by weight, more preferably 0 to 5% by weight.

The content of the reactive group in the acrylic rubber of the present invention may be appropriately selected according to the purpose of use, but when it is usually in the range of 0.001 to 5% by weight ratio of the reactive group itself, preferably 0.01 to 3% by weight, more preferably 0.05 to 1% by weight, particularly preferably 0.1 to 0.5% by weight, it is preferable, since the properties such as processability, strength properties, compression set resistance, oil resistance, cold resistance, and water resistance of the acrylic rubber are highly well-balanced. Further, the reactive group is, similar to the reactive group of the aforementioned reactive monomer, preferably at least one functional group selected from the group consisting of a carboxyl group, an epoxy group and a halogen group, more preferably at least one functional group selected from the group consisting of a carboxyl group, an epoxy group and a chlorine atom, particularly preferably an epoxy group, carboxyl group, most preferably a carboxyl group.

The ash content of acrylic rubber of the present invention is 0.5% by weight or less, preferably 0.4% by weight or less, more preferably 0.3% by weight or less, particularly preferably 0.2% by weight or less, most preferably 0.13% by weight or less, and when the ash content is in this range, it is preferable since the acrylic rubber is excellent in water resistance.

The lower limit of the ash content of the acrylic rubber of the present invention is not particularly limited, but when it is usually 0.0001% by weight or more, preferably 0.0005% by weight or more, more preferably 0.001% by weight or more, particularly preferably 0.005% by weight or more, and most preferably 0.01% by weight or more, it is preferable since stickiness to the metal surface of the rubber is reduced and the workability becomes excellent. Therefore, in the acrylic rubber of the present invention, the total ash content is preferably in the range of 0.0001 to 0.5% by weight.

Ash content of the acrylic rubber of the present invention at which the water resistance and the workability of the acrylic rubber are highly well-balanced is not particularly limited, it is usually in the range of 0.0001 to 0.5% by weight, preferably 0.0005 to 0.4% by weight, more preferably 0.001 to 0.3% by weight, particularly preferably 0.005 to 0.2% by weight, most preferably 0.01 to 0.13% by weight.

When the total amount of magnesium and phosphorus in the ash in the acrylic rubber of the present invention accounts for 30% by weight or more, preferably 50% by weight or more, more preferably 80% by weight or more, particularly preferably 85% of the total ash, it is preferable, since the water resistance of the acrylic rubber is high.

The amount of magnesium in the ash of the acrylic rubber of the present invention is not particularly limited, but when it is usually in the range of 100 to 1,500 ppm, preferably 150 to 650 ppm, more preferably 200 to 400 ppm, it is preferable, since the acrylic rubber is excellent in water resistance and anti-stickiness to the metal surface.

The amount of phosphorus in the ash of the acrylic rubber of the present invention is not particularly limited, but when it is usually in the range of 200 to 1,500 ppm, preferably 300 to 900 ppm, more preferably 400 to 700 ppm, it is preferable, since the acrylic rubber is excellent in water resistance and anti-stickiness to the metal surface.

When the weight ratio of magnesium to phosphorus ([Mg] / [P]) in the ash of the acrylic rubber of the present invention is in the range of 0.4 to 2.5, preferably 0.45 to 1.2, and more preferably 0.46 to 1, particularly 0.48 to 0.8, most preferably 0.5 to 0.7, it is preferable, since the water resistance and anti-stickiness to the metal surface of the acrylic rubber becomes highly excellent.

Here, although the ash in the acrylic rubber is mainly derived from the emulsifier used when emulsifying and polymerizing the monomer component and the coagulant used when coagulating the emulsion polymerization liquid, the total ash content and the content of magnesium and phosphorus in the ash vary depending on not only the conditions of the emulsion polymerization process and the coagulation process but also the various conditions in each of the subsequent processes.

The glass transition temperature (Tg) of the acrylic rubber of the present invention may be appropriately selected according to the purpose of use of the acrylic rubber, but when it is usually 20°C or less, preferably 10°C or less, and more preferably 0°C or less, it is preferable since the acrylic rubber has excellent processability and cold resistance. The lower limit of the glass transition temperature (Tg) of the acrylic rubber is not particularly limited, but it is usually -80°C or higher, preferably -60°C or higher, more preferably -40°C or higher. When the glass transition temperature (Tg) is above the lower limit, the oil resistance and heat resistance will be more excellent, and when the glass transition temperature is below the above upper limit, the cold resistance and processability will be more excellent.

The complex viscosity ([η] 60°C) at 60°C of the acrylic rubber of the present invention is not particularly limited, but when it is usually 15,000 Pa·s or less, preferably 2,000 to 10,000 Pa·s, more preferably 2,500 to 7,000 Pa·s, and most preferably 2,700 to 5,500 Pa·s, it is preferable, since the processability, oil resistance, and shape retention are excellent.

The complex viscosity ([η] 100°C) at 100°C of the acrylic rubber according to the present invention is not particularly limited, but when it is usually 1,500 to 6,000 Pa·s, preferably 2,000 to 5, 000 Pa·s, more preferably 2,500 to 4,000 Pa·s, and most preferably 2,500 to 3,500 Pa·s, it is preferable, since the processability, oil resistance and shape retention are excellent.

The ratio ([η] 100°C / [η] 60°C) of complex viscosity ([η] 100°C) at 100°C and complex viscosity ([η] 60°C) at 60°C of the acrylic rubber according to the present invention is not particularly limited, but it is usually 0.5 or more, preferably 0.6 or more, more preferably 0.7 or more, particularly preferably 0.8 or more, most preferably 0.83 or more. And, when the ratio ([η] 100°C / [η] 60°C) of complex viscosity ([η] 100°C) at 100°C and complex viscosity ([η] 60°C) at 60°C is in the range of 0.5 to 0.99, preferably 0.6 to 0.98, more preferably 0.7 to 0.96, particularly preferably 0.8 to 0.95, most preferably 0. 83 to 0.93, it is preferable, since the processability, oil resistance, and shape retention are highly well-balanced.

The gel amount of the acrylic rubber of the present invention may be appropriately selected according to the purpose of use, but when the amount of gel insoluble in methyl ethyl ketone of the acrylic rubber of the present invention is usually 50% by weight or less, preferably 30% by weight or less, more preferably 15% by weight or less, particularly preferably 10% by weight or less, most preferably 5% by weight or less, it is preferable, since the processability at the time of kneading by Banbury mixer or the like is highly improved.

The specific gravity of the acrylic rubber of the present invention is appropriately selected according to the purpose of use, but when it is usually in the range of 0.7 to 1.5, preferably 0.8 to 1.4, more preferably 0.9 to 1.3, particularly preferably 0.95 to 1.25, and most preferably 1.0 to 1.2, it is preferable, since the storage stability is excellent.

The water content of the acrylic rubber of the present invention is appropriately selected according to the purpose of use of the acrylic rubber, but when it is usually less than 1% by weight, preferably 0.8% by weight or less, more preferably 0.6% by weight or less, it is preferable, since the vulcanization properties of the acrylic rubber are optimized, and the properties such as heat resistance and water resistance of the acrylic rubber are highly improved.

The pH of the acrylic rubber of the present invention is not particularly limited, but when it is usually in the range of 6 or less, preferably 2 to 6, more preferably 2.5 to 5.5, and most preferably 3 to 5, it is preferable, since the storage stability of the acrylic rubber is highly improved.

When the Mooney viscosity (ML1+4,100°C) of the acrylic rubber according to the present invention is usually 10 to 150, preferably 20 to 100, more preferably 25 to 70, it is preferable, since the processability and strength properties of the acrylic rubber are highly well-balanced.

The shape of the acrylic rubber of the present invention is not particularly limited, but it may be selected appropriately according to the purpose of use, and the shape can be for example crumb-shaped, powder-shaped, rod-shaped, sheet-shaped, or bale-shaped, but the sheet-shaped or bale-shaped is preferable, since it is remarkably excellent in workability and storage stability.

The sheet-shaped or the bale-shaped acrylic rubber of the present invention, which is one embodiment of the above-described acrylic rubber, is preferable, since it remarkably excels over the crumb-shaped acrylic rubber and the like in workability, and specific surface area of the acrylic rubber is small so that it is remarkably excellent in storage stability. The sheet-shaped or the bale-shaped acrylic rubber of the present invention is in a raw rubber state and uncross-linked.

The specific gravity of the sheet-shaped or the bale-shaped acrylic rubber of the present invention is not particularly limited, but it is usually 0.7 or more, preferably 0.8 or more, more preferably 0.9 or more, particularly 0.95 or more, most preferably 1.0 or more. Further, when the specific gravity of the sheet-shaped or the bale-shaped acrylic rubber of the present invention is usually in the range of 0.7 to 1.5, preferably 0.8 to 1.4, more preferably 0.9 to 1.3, particularly preferably 0.95 to 1.25, most preferably 1.0 to 1.2, it is preferable, since the storage stability and the processability are highly well-balanced.

The thickness of the sheet-shaped acrylic rubber of the present invention is not particularly limited and is appropriately selected according to the purpose of use, but when it is usually in the range of 1 to 40 mm, preferably 2 to 35 mm, more preferably 3 to 30 mm, most preferably 5 to 25 mm, it is preferable, since the workability, the storage stability and the productivity are highly well-balanced. The width of the sheet-shaped acrylic rubber of the present invention is not particularly limited and is appropriately selected according to the purpose of use, but when it is usually in the range of 300 to 1,200 mm, preferably 400 to 1,000 mm, more preferably 500 to 800 mm, it is preferable, since the ease of handling is particularly excellent. The length of the sheet-shaped acrylic rubber of the present invention is not particularly limited, but when it is usually in the range of 300 to 1,200 mm, preferably 400 to 1,000 mm, more preferably 500 to 800 mm, it is preferable, since the ease of handling is particularly excellent.

The shape of the bale-shaped acrylic rubber of the present invention is not particularly limited and is appropriately selected according to the purpose of use, but in many cases, rectangular is preferable. The size of the bale-shaped acrylic rubber of the present invention is not particularly limited and is appropriately selected according to the purpose of use, but it is appropriate that the width is usually in the range of 100 to 800 mm, preferably 200 to 500 mm, more preferably 250 to 450 mm, the length is usually in the range of 300 to 1,200 mm, preferably 400 to 1,000 mm, more preferably 500 to 800 mm, and the height (thickness) is usually in the range of 50 to 500 mm, preferably 100 to 300 mm, more preferably 150 to 250 mm.

<Method for Producing Acrylic Rubber>

The method for producing the acrylic rubber is not particularly limited, but the acrylic rubber can be easily produced by, for example, a method comprising: an emulsion polymerization process to emulsify a monomer component by water and a divalent phosphate ester salt, the monomer component containing at least one (meth) acrylic acid ester selected from the group consisting of (meth) acrylic acid alkyl ester and (meth) acrylic acid alkoxyalkyl ester, a reactive monomer, and other copolymerizable monomer as necessary, and to emulsion-polymerize the emulsified monomer liquid in the presence of a polymerization catalyst to obtain an emulsion polymerization liquid; a coagulation process to generate hydrous crumbs by adding the obtained emulsion polymerization liquid to an aqueous solution of a magnesium salt being stirred; a washing process to wash the generated hydrous crumbs with hot water; and a drying process to dry the washed hydrous crumbs.
Hereinafter, the embodiments of the above processes will be respectively described.

(Emulsion Polymerization Process)

The emulsion polymerization process in the method for producing an acrylic rubber according to the present invention is characterized in that a monomer component is emulsified by water and a divalent phosphate ester salt, the monomer component containing at least one (meth) acrylic acid ester selected from the group consisting of (meth) acrylic acid alkyl ester and (meth) acrylic acid alkoxyalkyl ester, a reactive monomer, and copolymerizable other monomer as necessary, and the emulsified monomer liquid is emulsion-polymerized in the presence of a polymerization catalyst to obtain an emulsion polymerization liquid, so called latex.
The monomer component used in the emulsion polymerization process of acrylic rubber is the same as the above-mentioned examples and preferable ranges of the monomer component. The amount of the monomer component used is also as described above, and in the emulsion polymerization process, each monomer may be appropriately selected so as to have the above composition of the acrylic rubber of the present invention.
The divalent phosphate ester salt used as the emulsifier in the emulsion polymerization process is not particularly limited as long as it can be used as an emulsifier in the emulsion polymerization reaction. Usually, a divalent phosphate ester metal salt is used, preferably an alkali metal salt of the divalent phosphate ester, and more preferably a sodium salt of the divalent phosphate ester. Specific examples of the divalent phosphate ester salt include an alkyloxypolyoxyalkylene phosphate ester salt, an alkylphenyloxypolyoxyalkylene phosphate ester salt, and the like. Among these, metal salts thereof are preferable, alkali metal salts are more preferable, and sodium salts thereof are most preferable.
Examples of the alkyloxypolyoxyalkylene phosphate ester salt include, for example, alkyloxypolyoxyethylene phosphate ester salt, alkyloxypolyoxypropylene phosphate ester salt, and the like. Among these, alkyloxypolyoxyethylene phosphate ester salt is preferable.
Examples of the alkyloxypolyoxyethylene phosphate ester salt include metal salts of octyloxydioxyethylene phosphate, octyloxytrioxyethylene phosphate, octyloxytetraoxyethylene phosphate, decyloxytetraoxyethylene phosphate, dodecyloxytetraoxyethylene phosphate, tridecyloxytetraoxyethylene phosphate, tetradecyloxytetraoxyethylene phosphate, hexadecyloxytetraoxyethylene phosphate, octadecyloxytetraoxyethylene phosphate, octyloxypentaoxyethylene phosphate, decyloxypentaoxyethylene phosphate, dodecyloxypentaoxyethylene phosphate, tridecyloxypentaoxyethylene phosphate, tetradecyloxypentaoxyethylene phosphate, hexadecyloxypentaoxyethylene phosphate, octadecyloxypentaoxyethylene phosphate, octyloxyhexaoxyethylene phosphate, decyloxyhexaoxyethylene phosphate, dodecyloxyhexaoxyethylene phosphate, tridecyloxyhexaoxyethylene phosphate, tetradecyloxyhexaoxyethylene phosphate, hexadecyloxyhexaoxyethylene phosphate, octadecyl oxyhexaoxyethylene phosphate, octyloxyoctaoxyethylene phosphate, decyloxyoctaoxyelene phosphate, dodecyloxyoctaoxyethylene phosphate, tridecyloxyoctaoxyethylene phosphate, tetradecyloxyoctaoxyethylene phosphate, hexadecyloxyoctaoxyethylene phosphate, octadecyloxyoctaoxyethylene phosphate and the like. Among these, alkali metal salts thereof, particularly sodium salts thereof are preferable.
Examples of the alkyloxypolyoxypropylene phosphate ester salt include octyloxydioxypropylene phosphate, octyloxytrioxypropylene phosphate, octyloxytetraoxypropylene phosphate, decyloxytetraoxypropylene phosphate, dodecyloxytetraoxypropylene phosphate, tridecyloxytetraoxypropylene phosphate, tetradecyloxytetraoxypropylene phosphate, hexadecyloxytetraoxypropylene phosphate, octadecyloxytetraoxypropylene phosphate, octyloxypentaoxypropylene phosphate, decyloxypentaoxypropylene phosphate, dodecyloxypentaoxypropylene phosphate, tridecyloxypentaoxypropylene phosphate, tetradecyloxypentaoxypropylene phosphate, hexadecyloxypentaoxypropylene phosphate, octadecyloxypentaoxypropylene phosphate, octyloxyhexaoxypropylene phosphate, decyloxyhexaoxypropylene phosphate, dodecyloxyhexaoxypropylene phosphate, tridecyloxyhexaoxypropylene phosphate, tetradecyloxyhexaoxypropylene phosphate, hexadecyloxyhexaoxypropylene phosphate, octadecyloxyhexaoxypropylene phosphate, octyl oxyoctaoxypropylene phosphate, decyloxyoctaoxypropylene phosphate, dodecyloxyoctaoxypropylene phosphate, tridecyloxyoctaoxyethylene phosphate, tetradecyloxyoctaoxypropylene phosphate, hexadecyloxyoctaoxypropylene phosphate, octadecyloxyoctaoxypropylene phosphate, and metal salts thereof. Among these, alkali metal salts thereof, particularly sodium salts thereof are preferable.

Examples of the alkylphenyloxypolyoxyalkylene phosphate ester salt include alkylphenyloxypolyoxyethylene phosphate ester salts, alkylphenyloxypolyoxypropylene phosphate ester salts. Among these, alkylphenyloxypolyoxyethylene phosphate ester salts are preferable.

Examples of the alkylphenyloxypolyoxyethylene phosphate ester salt include metal salts of methylphenyloxytetraoxyethylene phosphate, ethylphenyloxytetraoxyethylene phosphate, butylphenyloxytetraoxyethylene phosphate, hexylphenyloxytetraoxyethylene phosphate, nonylphenyloxytetraoxyethylene phosphate, dodecylphenyloxytetraoxyethylene phosphate, octadecyloxytetraoxyethylene phosphate, methylphenyloxypentaoxyethylene phosphate, ethylphenyloxypenta oxyethylene phosphate, butylphenyloxypentaoxyethylene phosphate, hexylphenyloxypentaoxyethylene phosphate, nonylphenyloxypentaoxyethylene phosphate, dodecylphenyloxypentaoxyethylene phosphate, methylphenyloxyhexaoxyethylene phosphate, ethylphenyloxyhexaoxyethylene phosphate, butylphenyloxyhexaoxyethylene phosphate, hexylphenyloxyhexaoxyethylene phosphate, nonylphenyloxyhexaoxyethylene phosphate, dodecylphenyloxyhexaoxyethylene phosphate, methylphenyloxyhexaoxyethylene phosphate, ethylphenyloxyoctaoxyethylene phosphate, butylphenyloxyoctaoxyethylene phosphate, hexylphenyloxyoctaoxyethylene phosphate, nonylphenyloxyoctaoxyethylene phosphate, dodecylphenyloxyoctaoxyethylene phosphate. Among these, alkali metal salts thereof, and particularly sodium salts thereof are preferable.

Examples of the alkylphenyloxypolyoxypropylene phosphate ester salt include metal salts of methylphenyloxytetraoxypropylene phosphate, ethylphenyloxytetraoxypropylene phosphate, butylphenyloxytetraoxypropylene phosphate, hexylphenyloxytetraoxypropylene phosphate, nonylphenyloxytetraoxypropylene phosphate, dodecylphenyloxytetraoxypropylene phosphate, methylphenyloxypentaoxypropylene phosphate, ethylphenyloxypentaoxypropylene phosphate, butylphenyloxypentaoxypropylene phosphate, hexylphenyloxypentaoxypropylene phosphate, nonylphenyloxypentaoxypropylene phosphate, dodecylphenyloxypentaoxypropylene phosphate, methylphenyloxyhexaoxypropylene phosphate, ethylphenyloxyhexaoxypropylene phosphate, butylphenyloxyhexaoxypropylene phosphate, hexylphenyloxyhexaoxypropylene phosphate, nonylphenyloxy hexaoxypropylene phosphate, dodecylphenyloxyhexaoxypropylene phosphate, methylphenyloxyoctaoxypropylene phosphate, ethylphenyloxyoctaoxypropylenephosphate, butylphenyloxyoctaoxypropylenephosphate, hexylphenyloxyoctaoxyethylene phosphate, nonylphenyloxyoctaoxypropylene phosphate, dodecylphenyloxyoctaoxypropylene phosphate. Among these, alkali metal salts thereof, particularly sodium salts thereof are preferable.

These divalent phosphate ester salts can be used alone or in combination of two or more, and the amount used is usually 0.01 to 10 parts by weight with respect to 100 parts by weight of the monomer component, preferably 0.1 to 5 parts by weight, more preferably 1 to 3 parts by weight.

In the method of the present invention, it is preferable to use only the above divalent phosphate ester salt as an emulsifier, however, as the case may be, the above divalent phosphate ester salt may be used in combination with other emulsifiers. The other emulsifiers that can be used in combination with the above divalent phosphate ester salt include, for example, other anionic emulsifiers, cationic emulsifiers and nonionic emulsifiers, and preferably other anionic emulsifiers and nonionic emulsifiers, particularly preferably a monovalent phosphate ester salt.

Examples of such other anionic emulsifiers include: salts of fatty acids such as myristic acid, palmitic acid, oleic acid, and linolenic acid; alkylbenzene sulfonates such as sodium dodecylbenzene sulfonate; sulfate ester salts such as sodium lauryl sulfate; monovalent phosphate ester salts such as di(alkyloxypolyoxyalkylene) phosphate salts; alkyl sulfosuccinate; and the like. Among these anionic emulsifiers, monovalent phosphate ester salts and sulfate ester salts are preferable, and monovalent phosphate ester salts are more preferable.

Examples of the cationic emulsifier include alkyl trimethylammonium chloride, dialkylammonium chloride, benzyl ammonium chloride and the like.

Examples of nonionic emulsifiers include: polyoxyalkylene fatty acid esters such as polyoxyethylene stearic acid esters; polyoxyalkylene alkyl ethers such as polyoxyethylene dodecyl ether; polyoxyalkylene alkylphenol ethers such as polyoxyethylene nonylphenyl ether; polyoxyethylene sorbitan alkyl ester; and the like. Among these, polyoxyalkylene alkyl ether and polyoxyalkylene alkylphenol ether are preferable, and polyoxyethylene alkyl ether and polyoxyethylene alkylphenol ether are more preferable.

Other emulsifiers as mentioned above can be used alone or in combination of two or more, and the amount used may be appropriately selected within a range that does not impair the effects according to the present invention. In that case, other emulsifiers are used, the amount thereof is preferably small, and is usually in the range of 0.01 to 10 parts by weight with respect to 100 parts by weight of the monomer component, preferably 0.1 to 5 parts by weight, more preferably 1 to 3 parts by weight.

The method for mixing the monomer component, water and the emulsifier (the mixing method) may be according to a conventional method, and examples thereof include a method of stirring the monomer, the emulsifier and water using a stirrer such as a homogenizer or a disk turbine, and the like. The amount of water used is usually in the range of 1 to 1,000 parts by weight, preferably 5 to 500 parts by weight, more preferably 10 to 300 parts by weight, particularly preferably 15 to 150 parts by weight, and most preferably 20 to 80 parts by weight, based on 100 parts by weight of the monomer component.

The polymerization catalyst used is not particularly limited as long as it is usually used in emulsion polymerization, but, for example, a redox catalyst composed of a radical generator and a reducing agent can be used.

Examples of the radical generator include peroxides and azo compounds, and peroxides are preferable. An inorganic peroxide or an organic peroxide is used as the peroxide.

Examples of the inorganic peroxides include sodium persulfate, potassium persulfate, hydrogen peroxide, ammonium persulfate and the like. Among these, potassium persulfate, hydrogen peroxide and ammonium persulfate are preferable, and potassium persulfate is particularly preferable.

The organic peroxide is not particularly limited as long as it is used in emulsion polymerization of the acrylic rubber. Examples of the organic peroxide include, for example, 2,2-di(4,4-di-(t-butylperoxy) cyclohexyl) propane, 1-di-(t-hexylperoxy) cyclohexane, 1,1-di-(t-butylperoxy) cyclohexane, 4,4-di-(t-butylperoxy) n-butylvalerate, 2,2-di-(t-butylperoxy) butane, t-butyl hydroperoxide, cumene hydroperoxide, diisopropylbenzene hydroperoxide, paramenthane hydroperoxide, benzoyl peroxide, 1,1,3,3-tetraethyl butyl hydroperoxide, t-butyl cumyl peroxide, di-t-butyl peroxide, di-t-hexyl peroxide, di(2-t-butylperoxyisopropyl) benzene, dicumyl peroxide, diisobutyryl peroxide, di(3,5,5-trimethylhexanoyl) peroxide, dilauroyl peroxide, disuccinic acid peroxide, dibenzoyl peroxide, di(3-methylbenzoyl) peroxide, benzoyl (3-methylbenzoyl) peroxide, diisobutyryl peroxydicarbonate, di-n-propyl peroxydicarbonate, di(2-ethylhexyl) peroxydicarbonate, di-sec-butylperoxydicarbonate, 1,1,3,3-tetramethylbutylperoxyneodecanate, t-hexylperoxypivalate, t-butylperoxyneodecanate, t-hexylperoxypivalate, t-butylperoxypivalate, 2,5-dimethyl-2,5-di(2-ethylhexanoylperoxy) hexane, 1,1,3,3-tetramethylbutylperoxy-2-ethylhexanate, t-hexylperoxy-2-ethylhexanate, t-butylperoxy-3,5,5-trimethylhexanate, t-hexylperoxyisopropyl monocarbonate, t-butylperoxyisopropyl monocarbonate, t-butylperoxy-2-ethylhexyl monocarbonate, 2,5-dimethyl-2,5-di(benzoylperoxy) hexane, t-butylperoxyacetate, t-hexylperoxybenzoate, t-butyl peroxybenzoate, 2,5-dimethyl-2,5-di(t-butylperoxy) hexane. Among these, diisopropylbenzene hydroperoxide, cumene hydroperoxide, paramenthane hydroperoxide, benzoyl peroxide and the like are preferable.

Examples of the azo compound include, for example, azobisisoptyronitrile, 4,4'-azobis (4-cyanovaleric acid), 2,2'-azobis [2-(2-imidazolin-2-yl) propane, 2,2'-azobis (propane-2-carboamidine), 2,2'-azobis [N-(2-carboxyethyl)-2-methylpropanamide], 2,2'-azobis {2-[1-(2-hydroxyethyl)-2-imidazoline-2-yl] propane}, 2,2'-azobis (1-imino-1-pyrrolidino-2-methylpropane) and 2,2'-azobis {2-methyl-N-[1,1-bis (hydroxymethyl)-2-hydroxyethyl] propanamide}, and the like.

These radical generators may be used alone or in combination of two or more, and the amount thereof with respect to 100 parts by weight of the monomer component is usually in the range of 0.0001 to 5 parts by weight, preferably 0.0005 to 1 parts by weight, more preferably 0.001 to 0.5 part by weight.

The reducing agent can be used without particular limitation as long as it is used in a redox catalyst for emulsion polymerization, but in the present invention, it is particularly preferable to use at least two reducing agents. As the at least two reducing agents, for example, a combination of a metal ion compound in a reduced state and another reducing agent is preferable.

The metal ion compound in the reduced state is not particularly limited, and examples thereof include ferrous sulfate, sodium hexamethylenediamine iron tetraacetate, cuprous naphthenate, and the like, and among these, ferrous sulfate is preferable. These metal ion compounds in a reduced state can be used alone or in combination of two or more, and the amount of the metal ion compounds used with respect to 100 parts by weight of the monomer component is usually in the range of 0.000001 to 0.01 parts by weight, preferably 0.00001 to 0.001 parts by weight, more preferably 0.00005 to 0.0005 parts by weight.

The reducing agent other than the metal ion compound in the reduced state is not particularly limited, but examples thereof include: ascorbic acid such as ascorbic acid, sodium ascorbate, potassium ascorbate or a salt thereof; erythorbic acid such as erythorbic acid, sodium erythorbate, potassium erythorbate or a salt thereof; sulfinic acid salts such as sodium hydroxymethanesulfinate; sulfites such as sodium sulfite, potassium sulfite, sodium bisulfite, aldehyde sodium bisulfite, potassium bisulfite; pyrosulfites such as sodium pyrosulfite, potassium pyrosulfite, sodium hydrogensulfite, potassium hydrogensulfite and the like; thiosulfates such as sodium thiosulfate and potassium thiosulfate; phosphorus acid such as phosphorus acid, sodium phosphite, potassium phosphite, sodium hydrogen phosphite and potassium hydrogen phosphite, or salts thereof; pyrophosphite such as pyrophosphite, sodium pyrophosphite, potassium pyrophosphite, sodium hydrogen pyrophosphite, potassium hydrogen pyrophosphite, or a salt thereof; sodium formaldehyde sulfoxylate, and the like. Among these, ascorbic acid or a salt thereof, sodium formaldehyde sulfoxylate and the like are preferable, and ascorbic acid or a salt thereof is particularly preferable.

These reducing agents other than the metal ion compound in the reduced state can be used alone or in combination of two or more, and the amount used with respect to 100 parts by weight of the monomer component is usually in the range of 0.001 to 1 part by weight, preferably 0.005 to 0.5 part by weight, more preferably 0.01 to 0.1 part by weight.

A preferable combination of the metal ion compound in the reduced state and the other reducing agent is a combination of ferrous sulfate and ascorbic acid or a salt thereof and / or sodium formaldehyde sulfoxylate. A combination of ferrous sulfate with ascorbate and / or sodium formaldehyde sulfoxylate is more preferable. The most preferable is a combination of ferrous sulfate and ascorbate. The amount of ferrous sulfate used with respect to 100 parts by weight of the monomer component at this time is usually in the range of 0.000001 to 0.01 parts by weight, preferably 0.00001 to 0.001 parts by weight, more preferably 0.00005 to 0.0005 parts by weight, and the amount of ascorbic acid or a salt thereof and / or sodium formaldehyde sulfoxylate used with respect to 100 parts by weight of the both components is usually in the range of 0.001 to 1 part by weight, preferably 0.005 to 0.5 part by weight, more preferably 0.01 to 0.1 part by weight.

The amount of water used in the emulsion polymerization reaction may be only the amount used for preparing the monomer emulsion, but is usually adjusted to be in the range of 10 to 1,000 parts by weight, preferably 50 to 500 parts by weight, more preferably 80 to 400 parts by weight, and most preferably 100 to 300 parts by weight, with respect to 100 parts by weight of the monomer component for polymerization.

The emulsion polymerization reaction method may be a conventional method, and may be a batch method, a semi-batch method, or a continuous method. The polymerization temperature and the polymerization time are not particularly limited and can be appropriately selected depending on the type of the polymerization initiator used and the like. The polymerization temperature is usually 0 to 100°C, preferably 5 to 80°C, more preferably 10 to 50°C, and the polymerization time is usually 0.5 to 100 hours, preferably 1 to 10 hours.

The polymerization conversion rate of the emulsion polymerization reaction is not particularly limited, but it is usually 80% by weight or more, preferably 90% by weight or more, more preferably 95% by weight or more, and the acrylic rubber produced at this condition is preferable since it is excellent in strength properties and free of monomer odor. A polymerization terminator may be used for termination of the polymerization.


(Coagulation Process)

The coagulation process in the method for producing an acrylic rubber according to the present invention is characterized in that the emulsion polymerization liquid obtained in the above emulsion polymerization process is added in an aqueous solution of a magnesium salt being stirred, so that hydrous crumbs having a specific crumb diameter can be obtained.

The solid content concentration of the emulsion polymerization liquid supplied to the coagulation process is not particularly limited, but it is usually adjusted to 5 to 50% by weight, preferably 10 to 45% by weight, more preferably 20 to 40% by weight.

The magnesium salt used as a coagulant is not particularly limited, but examples thereof include: inorganic magnesium salts such as magnesium chloride, magnesium nitrate, magnesium sulfate and the like; and organic magnesium salts such as magnesium formate, magnesium acetate and the like. Among these, inorganic magnesium salts are preferable, and magnesium sulfate is particularly preferable.

These magnesium salts can be used alone or in combination of two or more, and the amount thereof is usually in the range of 0.01 to 100 parts by weight, preferably 0.1 to 50 parts by weight, more preferably 1 to 30 parts by weight with respect to 100 parts by weight of the monomer component. When the amount of the magnesium salt is within this range, the compression set resistance and the water resistance when the acrylic rubber is cross-linked can be highly improved while the acrylic rubber is sufficiently coagulated, which is preferable. In the present invention, a coagulant other than magnesium salt may be used in combination within a range that does not degrade the effect according to the present invention.

It is desirable that the concentration of magnesium salt in the aqueous magnesium salt solution used is usually in the range of 0.1 to 20% by weight, preferably 0.5 to 10% by weight, more preferably 1 to 5% by weight, since the particle size of the generated hydrous crumbs can be focused uniformly and in a specific region.

The temperature of the aqueous magnesium salt solution to be used is not particularly limited, but when it is usually within a range of 40°C or higher, preferably 40 to 90°C, and more preferably 50 to 80°C, it is preferable, since uniform hydrous crumbs are generated.

The method for producing an acrylic rubber of the present invention is characterized in that the contact of the emulsion polymerization liquid with the magnesium salt aqueous solution at the coagulation process is performed by a method of adding the emulsion polymerization liquid to the magnesium salt aqueous solution being stirred. This method is preferable because it can suppress the generation of huge and micro hydrous crumbs and can remarkably improve the washing efficiency of the emulsifier and the coagulant.

In the present invention, the stirring speed (stirring number) of the magnesium salt aqueous solution being stirred is represented by the number of rotations per minute (specifically, the number of rotations of the stirring blades) of the stirring device provided in the coagulation tank. The rotation speed is usually in the range of 100 rpm or more, preferably 200 to 1,000 rpm, more preferably 300 to 900 rpm, particularly preferably 350 to 850 rpm, and most preferably 400 to 800 rpm, since it is preferable to vigorously stir the magnesium salt aqueous solution when the emulsion polymerization liquid is added to the coagulation tank in order to make the particle size of the generated hydrous crumbs small and uniform. In a case that the stirring speed (rotation speed) of the magnesium salt aqueous solution is excessively low, crumbs of too large particle size and crumbs of fine particle size will be produced, while in a case that the stirring speed is excessively high, it will be difficult to control the coagulation reaction, and therefore it is unpreferable in the either cases.

Further, the peripheral speed of the magnesium salt aqueous solution being stirred is represented by the speed of the outer circumference of the stirring blade of the above-mentioned stirring device, but as described above, it is appropriate that the peripheral speed of the magnesium salt aqueous solution in the coagulation tank is at least 0.5 m/s or more, since the particle size of the generated hydrous crumbs can be made small and uniform when the magnesium salt aqueous solution is vigorously stirred. When this peripheral speed is 0.5 m/s or more, preferably 1 m/s or more, more preferably 1.5 m/s or more, particularly preferably 2 m/s or more, particularly 2.5 m/s or more, it is preferable, since hydrous crumbs having a crumb shape and a crumb diameter suitable for removing coagulants and emulsifiers in a washing process and a dehydrating process can be produced.

The upper limit of the peripheral speed of the magnesium salt aqueous solution being stirred is not particularly limited, but when it is usually 30 m/s or less, preferably 25 m/s or less, more preferably 20 m/s or less, particularly preferably 15 m/s or less, it is preferable, since the coagulation reaction can be easily controlled.

In the method for producing an acrylic rubber producing method of the present invention, when the above-mentioned conditions for the coagulation reaction (contact method, solid content concentration of emulsion polymerization liquid, concentration of aqueous magnesium salt solution, temperature, rotation speed, peripheral speed, and the like) are appropriately selected, it is preferable, since, by doing so, the shape and the crumb diameter of the generated hydrous crumb become uniform and focused, so that the removal efficiency of the emulsifier and the coagulant from the hydrous crumbs in the washing process and the dehydration process is significantly improved.

It is preferable that the hydrous crumbs thus generated satisfy all of the following conditions (a) to (e). Here, it should be noted that the JIS sieve is in compliance with Japanese Industrial Standards (JIS Z 8801-1).

(a) The ratio of the hydrous crumbs that do not pass through a JIS sieve having a mesh opening of 9.5 mm is 10% by weight or less,
(b) The ratio of the hydrous crumbs that pass through the JIS sieve having a mesh opening of 9.5 mm and do not pass through a JIS sieve having a mesh opening of 6.7 mm is 30% by weight or less,
(c) The ratio of the hydrous crumbs that pass through the JIS sieve having a mesh opening of 6.7 mm but do not pass through a JIS sieve having a mesh opening of 710 $\mu$m is 20% by weight or more,
(d) The ratio of the hydrous crumbs that pass through the JIS sieve having a mesh opening of 710 $\mu$m but do not pass through the JIS sieve having a mesh opening of 425 $\mu$m is 30% by weight or less, and
(e) The ratio of the hydrous crumbs that pass through the JIS sieve having a mesh opening of 425 $\mu$m is 10% by weight or less.

The granular or lumpy hydrous crumbs generated in the coagulation process have various sizes (crumb diameters) in general, but it is preferable that various conditions from the emulsion polymerization until the coagulation be so adjusted that the above conditions are satisfied when the JIS sieving is performed for all the hydrous crumbs.

When (a) the ratio of the hydrous crumbs in the generated hydrous crumbs that do not pass through the JIS sieve having a mesh opening of 9.5 mm is 10% by weight or less, preferably 5% by weight or less, more preferably 1% by weight or less, with respect to the generated hydrous crumbs, it is preferable, since the washing efficiency of the emulsifier and the coagulant can be significantly improved. Further, when (b) the ratio of the hydrous crumbs in the generated hydrous crumbs that pass through the JIS sieve having a mesh opening of 9.5 mm but do not pass through the JIS sieve having a mesh opening of 6.7 mm is 30% by weight or less, preferably 20% by weight or less, and more preferably 5% by weight or less, with respect to the generated hydrous crumbs, it is preferable, since the washing efficiency of the emulsifier and the coagulant can be remarkably improved. When (c) the ratio of the hydrous crumbs in the generated hydrous crumbs that pass through the JIS sieve having a mesh opening of 6.7 mm but do not pass through the JIS sieve having a mesh opening of 710 $\mu$m is 20% by weight or more, preferably 40% by weight or more, more preferably 70% by weight or more, most preferably at least 80% by weight or more, with respect to the generated hydrous crumbs, it is preferable, since the washing efficiency of the emulsifier and the coagulant can be remarkably improved. When (d) the ratio of the hydrous crumbs in the generated hydrous crumbs that pass through the JIS sieve having a mesh opening of 710 $\mu$m but do not pass through the JIS sieve having a mesh opening of 425 $\mu$m is 30% by weight or less, preferably 20% by weight or less, more preferably 15% by weight or less, with respect to the generated hydrous crumbs, it is preferable, since the washing efficiency of the emulsifier and the coagulant is remarkably improved and the productivity is high. Still further, when (e) the ratio of the hydrous crumbs in the produced hydrous crumbs that pass through the JIS sieve having a mesh opening of 425 $\mu$m is 10% by weight or less, preferably 5% by weight or less, more preferably 1% by weight or less, with respect to the generated hydrous crumbs, it is preferable, since the washing efficiency of the emulsifier and the coagulant is remarkably improved and the productivity is high.

Further, in the present invention, when the ratio of (f) the hydrous crumbs that pass through the JIS sieve having a mesh opening of 6.7 mm but do not pass through the JIS sieve having a mesh opening of 4.75 mm is usually 40% by weight or less, preferably 10% by weight or less, more preferably 5% by weight or less, with respect to the generated hydrous crumbs, it is preferable, since the washing efficiency of the emulsifier and the coagulant is improved. Furthermore, in the present invention, when the ratio of the (g) hydrous crumbs that pass through the JIS sieve having a mesh opening of 4.75 mm but do not pass through the JIS sieve having a mesh opening of 710 $\mu$m is usually 40% by weight or more, preferably 60% by weight or more, more preferably 80% by weight or more, with respect to the generated hydrous crumbs, it is preferable, since the removal efficiency of the emulsifier and the coagulant during washing and dehydration is remarkably improved.

Still further, in the present invention, when the ratio of (h) hydrous crumbs that pass through the JIS sieve having a mesh opening of 3.35 mm but do not pass through the JIS sieve having a mesh opening of 710 $\mu$m is usually 20% by weight or more, preferably 40% by weight or more, more preferably 50% by weight or more, particularly preferably 60% by weight or more, and most preferably 70% by weight or more, with respect to the generated hydrous crumbs, it is preferable, since the removal efficiency of the emulsifier and the coagulant during washing and dehydration is remarkably improved.

Although it was not known before at all that, as described above, it is possible to significantly improve the removal efficiency of emulsifiers and coagulants in hydrous crumbs during washing and dehydration, by adjusting the particle size (diameter) and particle size distribution of hydrous crumbs generated during the production of the acrylic rubber to a specific range, in the present invention, the above new knowledge is utilized so that a high-quality acrylic rubber having particularly excellent water resistance can be produced for the first time.

(Washing Process)

The washing process in the method for producing an acrylic rubber according to the present invention, which is a process to wash the hydrous crumbs generated in the above-mentioned coagulation process, is characterized in that the generated hydrous crumbs are washed by hot water.

The washing method is not particularly limited and may be a conventional method. For example, the generated hydrous crumbs can be mixed with a large amount of hot water.

The amount of hot water added in the washing process is not particularly limited, but when the amount of water per one washing is usually in the range of 50 parts by weight or more, preferably 50 to 15,000 parts by weight, more preferably 100 to 10,000 parts by weight, particularly preferably 500 to 5,000 parts by weight, with respect to 100 parts by weight of the monomer component, it is preferable, since the ash content in the acrylic rubber can be effectively reduced.

The temperature of the hot water to be used is not particularly limited, but when the temperature is usually 40°C or higher, preferably 40 to 100°C, more preferably 50 to 90°C, particularly preferably 60 to 80°C, it is the most preferable, since the washing efficiency can be remarkably increased. By setting the temperature of the hot water to be used above the aforementioned lower limit, the emulsifier and coagulant are released from the hydrous crumbs, so that the washing efficiency is further improved.

The washing time is not particularly limited, but the washing time is usually in the range of 1 to 120 minutes, preferably 2 to 60 minutes, more preferably 3 to 30 minutes.

The number of washings (washing with water) in the washing process is not particularly limited, and is usually 1 to 10 times, preferably 1 to 5 times, more preferably 2 to 3 times. From the viewpoint of reducing the residual amount of the coagulant in the finally obtained acrylic rubber, it is desirable that the number of times of washing with water is large, but as described above, the number of washings can be significantly reduced by setting the shape of the hydrous crumbs and the hydrous crumb diameter within a specific range and / or by setting the washing temperature in the above-mentioned range.

(Dehydration Process)

In the method for producing an acrylic rubber of the present invention, it is particularly preferable to be further provided with a dehydration process to dehydrate the washed hydrous crumbs to the water content of 1 to 50% by weight before transferring to the drying process, since the removal of the emulsifiers and the coagulants can be remarkably improved.

The dehydration means of the hydrous crumbs is not particularly limited and may be a conventional method. For example, water can be discharged from the hydrous crumbs by using a dehydrator such as a centrifuge, a squeezer or a screw-type extruder. Among these dehydrators, the squeezer and the screw-type extruder that forcibly squeeze out water from the hydrous crumbs are preferable, and among these, the screw-type extruder is the most preferable, since the acrylic rubber of the present invention has a strong stickiness, so that the acrylic rubber can be dehydrated only up to the water content of about 45 to 50% by weight in the centrifuge or the like.

When the water content of the hydrous crumbs after dehydration is 1 to 50% by weight, preferably 3 to 40% by weight, more preferably 5 to 35% by weight, most preferably 10 to 35% by weight, it is preferable, since the removal of the emulsifiers and the coagulants are remarkably improved, and the drying in the drying process becomes more efficient.

(Drying Process)

The drying process in the method for producing an acrylic rubber according to the present invention is a process of drying the hydrous crumbs after washing, preferably the hydrous crumbs dehydrated after washing, to obtain a dry acrylic rubber.

The method for drying the hydrous crumbs may be a conventional method, and for example, the hydrous crumbs can be dried using a dryer such as a hot air dryer, a reduced pressure dryer, an expander dryer, a kneader-type dryer or a screw-type extruder. The drying temperature of the hydrous crumbs is not particularly limited, but is usually in the range of 80 to 250°C, preferably 100 to 200°C, and more preferably 120 to 180°C.

The water content of the acrylic rubber after drying is less than 1% by weight, preferably 0.8% by weight or less, more preferably 0.6% by weight or less.

(Dehydration / Drying Process by Screw-Type Extruder)

In the method for producing an acrylic rubber of the present invention, it is preferable to perform the dehydration process and the drying process continually using a screw-type extruder provided with a dehydration barrel having a dehydration slit, a drying barrel for drying under reduced pressure, and a die at the tip end. Some embodiments of this process are described hereinafter, but these do not limit the scope of the present invention.

Dehydration and Drying in a Dehydration Barrel Unit

Dehydration of hydrous crumbs is performed in a dehydration barrel with a dehydration slit, the dehydration barrel provided in the screw-type extruder. The opening of the dehydration slit may be appropriately selected according to conditions of use, but when the opening is usually in the range of 0.01 to 5 mm, preferably 0.1 to 1 mm, more preferably 0.2 to 0.6 mm, it is preferable, since loss of the hydrous crumbs is small, and dehydration of the hydrous crumbs can be efficiently performed.

The number of dehydration barrels in the screw-type extruder is not particularly limited, but when the number is usually plural, preferably 2 to 10, more preferably 3 to 6, it is preferable from the viewpoint of efficient dehydration of the sticky acrylic rubber.

There are two types of dehydration from the hydrous crumbs in the dehydration barrel: liquid removal from the dehydration slit (drainage) and steam removal (steam exhausting). In the present invention, the drainage is defined as dehydration, and the steam exhausting is defined as preliminary drying, so that they can be distinguished.

When using a screw-type extruder provided with a plurality of dehydration barrels, it is particularly preferable to combine drainage (dehydration) and steam exhausting (preliminary drying) because it is possible to efficiently dehydrate the sticky acrylic rubber and reduce the water content. In a screw-type extruder having three or more dehydration barrels, the selection of each dehydration barrel to be a drainage type dehydration barrel or a steam exhausting type dehydration barrel may be appropriately made according to the purpose of use of the acrylic rubber, but in order to reduce the ash content in the rubber that is usually produced, it is preferable to increase the number of drainage type barrels, for example, two dehydration barrels can be selected as drainage type barrels when the screw-type extruder is provided with three dehydration barrels, or three dehydration barrels can be selected as drainage type barrels when the screw-type extruder is provided with four dehydration barrels.

The set temperature of the dehydration barrel is appropriately selected depending on the type of acrylic rubber, the ash content, the water content, the operating conditions, and the like, but it is usually in the range of 60 to 150°C, preferably 70 to 140°C, more preferably 80 to 130°C. The set temperature of the dehydration barrel for dehydration in the drainage state is usually in the range of 60 to 120°C, preferably 70 to 110°C, more preferably 80 to 100°C. The set temperature of the dehydration barrel for performing preliminary drying in the steam exhausting state is usually in the range of 100 to 150°C, preferably 105 to 140°C, more preferably 110 to 130°C.

The water content after dehydration of the hydrous crumbs, that is, the water content after passing through the drainage type barrel is not particularly limited, but when it is usually 1 to 50% by weight, preferably 3 to 40% by weight, more preferably 5 to 35% by weight, most preferably 10 to 35% by weight, it is preferable, since the removal of the emulsifiers and the coagulants can be efficiently performed. The water content after the dehydration in the case that the removal of the emulsifiers and the coagulants and the reduction of the water content effectively performed by the screw-type extruder is in the range of 5 to 40% by weight, preferably 10 to 40% by weight, more preferably 15 to 35% by weight.

When the dehydration is performed by a centrifuge or the like, dehydration of the sticky acrylic rubber, having a cross-linkable group in the aforementioned specific composition, can be hardly done because the acrylic rubber adheres to the dehydration slit portion (the water content is reduced here only to about 45 to 55% by weight). In the present invention, it is preferable to use a screw-type extruder provided with a dehydration barrel having a dehydrating slit and forcibly squeezed by a screw, since the water content can be efficiently reduced to a lower content.

The water content of the hydrous crumbs preliminarily dried in the steam exhausting type dehydration barrel after the above-mentioned dehydration is usually 1 to 30% by weight, preferably 3 to 20% by weight, more preferably 5 to 15% by weight.

Drying in a Drying Barrel

The hydrous crumbs dehydrated and dried in the above-mentioned dehydration barrel is further dried in a drying barrel under reduced pressure which is provided in the downstream (extruding) side of the same screw-type extruder.

The degree of decompression inside the drying barrel may be appropriately selected, but when it is usually 1 to 50 kPa, preferably 2 to 30 kPa, and more preferably 3 to 20 kPa, it is preferable, since the hydrous crumbs can be efficiently dried.

The set temperature of the drying barrel may be appropriately selected, but when the temperature is usually in the range of 100 to 250°C, preferably 110 to 200°C, more preferably 120 to 180°C, it is preferable, since there is no burning or deterioration of the acrylic rubber, so that the acrylic rubber is efficiently dried and the amount of gel insoluble in methyl ethyl ketone of the acrylic rubber can be reduced.

The number of drying barrels in the screw-type extruder is not particularly limited, but is usually plural, preferably 2 to 10, and more preferably 3 to 8. The degree of pressure reduction in the case of having a plurality of drying barrels may be a degree of pressure reduction similar to that of all the drying barrels, or it may vary by the drying barrel. The set temperature in the case of having multiple drying barrels may be similar to that of all the drying barrels or it may vary by the drying barrel, but when the temperature of the discharge portion (closer to the die) is set higher than the temperature of the introduction portion (closer to the dehydration barrel), it is preferable, since the drying efficiency can be increased.

The water content of the acrylic rubber crumbs after drying in the drying barrel unit is usually less than 1% by weight, preferably 0.8% by weight or less, and more preferably 0.6% by weight or less.

In the present invention, the acrylic rubber is melt-kneaded in the drying barrel of the screw-type extruder in a state where the water content is substantially free of water, so that the amount of gel insoluble in the methyl ethyl ketone in the acrylic rubber disappears, thereby improving the processability, which is preferable.

Acrylic Rubber Shape (Die Unit)

The acrylic rubber dehydrated and dried by the screw portions of the above-mentioned dehydration barrel and the drying barrel is sent to a screwless straightening die unit provided close to the tip of the screw-type extruder. A breaker plate or a wire net may or may not be provided between the screw portion and the die unit.

The acrylic rubber extruded from the die part of the screw-type extruder can be in various shapes such as a granular shape, a pellet shape, a columnar shape, a round bar shape and a band shape (sheet shape) depending on the nozzle shape of the die. For example, when the acrylic rubber is extruded in a sheet shape by making the die shape into a substantially rectangular shape, a sheet shaped dry rubber with less entrapment of air and higher specific gravity and excellent storage stability can be produced.

The resin pressure in the die unit is not particularly limited, but when the resin pressure is usually in the range of 0.1 to 10 MPa, preferably 0.5 to 5 MPa, and more preferably 1 to 3 MPa, it is preferable, since air entrapment is small (specific gravity is high) and the productivity is excellent.

Operating Conditions of Screw-Type Extruder

The screw length (L) of the screw-type extruder used may be appropriately selected according to the purpose of use, but it is usually in the range of 3,000 to 15,000 mm, preferably 4,000 to 10,000 mm, more preferably 4,500 to 8,000 mm.

The screw diameter (D) of the screw-type extruder used may be appropriately selected according to the purpose of use, but it is usually in the range of 50 to 250 mm, preferably 100 to 200 mm, more preferably 120 to 160 mm.

The ratio (L / D) of the screw length (L) to the screw diameter (D) of the screw-type extruder used is not particularly limited, but when it is usually in the range of 10 to 100, preferably 20 to 80, more preferably 30 to 60, it is preferable, since the water content can be less than 1% by weight without lowering the molecular weight of the dried rubber or causing burns.

The rotation speed (N) of the screw-type extruder may be appropriately selected according to various conditions, but when it is usually in the range of 10 to 1,000 rpm, preferably 50 to 750 rpm, more preferably 100 to 500 rpm, and most preferably 120 to 300 rpm, it is preferable, since the water content and gel amount of the acrylic rubber can be efficiently reduced.

The extrusion rate (Q) of the screw-type extruder is not particularly limited, but is usually in the range of 100 to 1,500 kg/hr, preferably 300 to 1,200 kg/hr, more preferably 400 to 1,000 kg/hr, most preferably 500 to 800 kg/hr.

The ratio (Q / N) of the extrusion rate (Q) and the number of revolutions (N) of the screw-type extruder is not particularly limited, but when it is usually in the range of 1 to 20, preferably 2 to 10, more preferably 3 to 8, and most preferably 4 to 6, it is preferable, since the strength properties and the like of the acrylic rubber and the productivity in production are highly well-balanced.

The acrylic rubber thus obtained is excellent in the storage stability and the water resistance. The water content of the obtained acrylic rubber is usually less than 1% by weight, preferably 0.8% by weight or less, more preferably 0.6% by weight or less. And, the shape of the acrylic rubber is not particularly limited, but it can be for example crumb-shaped, powder-shaped, rod-shaped, sheet-shaped, or bale-shaped, but the sheet-shaped or bale-shaped is preferable, since it is excellent in water resistance and remarkably excellent in workability and storage stability.

Sheet-shaped or Bale-shaped Acrylic Rubber

The sheet-shaped acrylic rubber can be obtained by extruding the sheet-shaped dry rubber through the die portion of the screw-type extruder having a substantially rectangular cross-section shape and then by cooling and cutting the rubber as required. The bale-shaped acrylic rubber can be obtained by laminating the obtained sheet-shaped acrylic rubber, though there is no particular limitation in the method for obtaining the bale-shaped acrylic rubber. Both of the sheet-shaped acrylic rubber and the bale-shaped acrylic rubber have better workability than crumb-shaped acrylic rubber and have less air entrapment (higher specific gravity), and are overwhelmingly excellent in storage stability, which is preferable.

The thickness of the sheet-shaped dry rubber extruded from the screw-type extruder is not particularly limited, but when it is usually in the range of 1 to 40 mm, preferably 2 to 35 mm, more preferably 3 to 30 mm, and most preferably 5 to 25 mm, it is preferable, since it has excellent workability and productivity. In particular, since the thermal conductivity of the sheet-shaped dry rubber is as low as 0.15 to 0.35 W/mK, in order to increase cooling efficiency and to improve the productivity remarkably, the thickness of the sheet-shaped dry rubber is usually in the range of 1 to 30 mm, preferably 2 to 25 mm, more preferably 3 to 15 mm, and particularly preferably 4 to 12 mm.

The width of the sheet-shaped dry rubber extruded from the screw-type extruder is appropriately selected according to the purpose of use, but it is usually in the range of 300 to 1,200 mm, preferably 400 to 1,000 mm, more preferably 500 to 800 mm.

The temperature of the dry rubber extruded from the screw-type extruder is not particularly limited, but it is usually in the range of 100 to 200°C, preferably 110 to 180°C, more preferably 120 to 160°C.

The water content of the dry rubber extruded from the screw-type extruder is not particularly limited, but it is usually less than 1% by weight, preferably 0.8 by weight or less, more preferably 0.6% by weight or less.

The complex viscosity ($[\eta]$ 100°C) at 100°C of the sheet-shaped dry rubber extruded from the screw-type extruder is not particularly limited, but when it is usually in the range of 1,500 to 6,000 Pa·s, preferably 2,000 to 5,000 Pa·s, more preferably 2,500 to 4,000 Pa·s, and most preferably 2,500 to 3,500 Pa·s, it is preferable, since the extrudability and shape retention as a sheet are highly well-balanced. This means that, when the value of the complex viscosity ($[\eta]$ 100°C) at 100°C is higher than the lower limit or higher, the extrudability can be more excellent, and when the value is lower than the upper limit or less, collapse and breakage of the shape of the sheet-shaped dry rubber can be suppressed.

The sheet-shaped dry rubber extruded from the screw-type extruder can be used by folding as it is, but it can usually be cut and used.

The cutting of the sheet-shaped dry rubber is not particularly limited, but since the acrylic rubber according to the present invention has strong stickiness, it is preferable that the sheet-shaped dry rubber is cut after cooling the same in order to continuously cut without entrapping air.

The cutting temperature of the sheet-shaped dry rubber is not particularly limited, but when the temperature is usually 60°C or less, preferably 55°C or less, more preferably 50°C or less, it is preferable, since the cutting property and the productivity are highly well-balanced.

The complex viscosity ($[\eta]$ 60°C) at 60°C of the sheet-shaped dry rubber is not particularly limited, but when it is usually in the range of 15,000 Pa·s or less, preferably 2,000 to 10,000 Pa·s, more preferably 2,500 to 7,000 Pa·s, and most preferably 2,700 to 5,500 Pa·s, it is preferable, since the cutting can be done continuously without entrapping air.

The ratio ([η] 100°C / [η] 60°C) of the complex viscosity ([η] 100°C) at 100°C to the complex viscosity ([η] 60°C) at 60°C of the sheet-shaped dry rubber is not particularly limited and can be appropriately selected according to the purpose of use, but when it is usually 0.5 or more, preferably 0.6 or more, more preferably 0.7 or more, particularly preferably 0.8 or more, most preferably 0.85 or more, and the upper limit value is usually 0.98 or less, preferably 0.97 or less, more preferably 0.96 or less, particularly preferably 0.95 or less, most preferably 0.93 or less, it is preferable, since air entrapment is low, and cutting and productivity are highly well-balanced.

The method for cooling the sheet-shaped dry rubber is not particularly limited and may be left at room temperature. However, since the sheet-shaped dry rubber has a very low thermal conductivity of 0.15 to 0.35 W/mK, forced cooling such as an air-cooling method under ventilation or cooling, a water-spraying method for spraying water, or a dipping method for immersing in water is preferable for improving productivity, and the air-cooling method under ventilation or cooling is particularly preferable.

By the air-cooling method for the sheet-shaped dry rubber, for example, the sheet-shaped dry rubber can be extruded from a screw-type extruder onto a conveyor such as a belt conveyor and conveyed while being cooled by blowing cold air, so that the sheet-shaped dry rubber can be cooled. The temperature of the cold air is not particularly limited, but is usually in the range of 0 to 25°C, preferably 5 to 25°C, more preferably 10 to 20°C. The length to be cooled is not particularly limited, but it is usually 5 to 500 m, preferably 10 to 200 m, more preferably 20 to 100 m. Although the cooling rate of the sheet-shaped dry rubber is not particularly limited, when it is usually in the range of 50°C/hr or higher, more preferably 100°C/hr or higher, more preferably 150°C/hr or higher, it is preferable, since it is particularly easy to cut.

The cutting length of the sheet-shaped dry rubber is not particularly limited and may be appropriately selected according to the purpose of use, but it is usually in the range of 100 to 800 mm, preferably 200 to 500 mm, more preferably 250 to 450 mm.

The sheet-shaped acrylic rubber thus obtained is excellent in operability, storage stability, processability, strength properties and compression set resistance as compared with crumb-shaped acrylic rubber, and the sheet-shaped acrylic rubber can be used as it is or can be used by laminating and baling.

Laminating Process

The method for producing a bale-shaped acrylic rubber of the present invention is not particularly limited, but by laminating the above-mentioned sheet-shaped dry rubber (sheet-shaped acrylic rubber), an acrylic rubber bale having little entrapment of air and excellent in storage stability can be obtained, which is preferable.

The lamination temperature of the sheet-shaped dry rubber is not particularly limited, but when it is usually 30°C or higher, preferably 35°C or higher, more preferably 40°C or higher, it is preferable, since air entrapped during lamination can be released. The number of laminated layers may be appropriately selected according to the size or weight of the bale-shaped acrylic rubber. The bale-shaped acrylic rubber of the present invention is integrated by the own weight of the laminated sheet-shaped dry rubber.

The bale-shaped acrylic rubber thus obtained is excellent in operability and storage stability as compared with crumb-shaped acrylic rubber, and is excellent in processability, strength properties and compression set resistance, and the bale-shaped acrylic rubber can be used by putting into a mixer such as a Banbury mixer or a roll mill as it is or after being cut into a required amount.

As described above, by the method for producing an acrylic rubber of the present invention, the acrylic rubber as described above can be effectively produced, the acrylic rubber comprising: a bonding unit derived from at least one (meth) acrylic acid ester selected from the group consisting of (meth) acrylic acid alkyl ester and (meth) acrylic acid alkoxyalkyl ester in the amount of 70 to 99.9% by weight; a bonding unit derived from a reactive monomer in the amount of 0.1 to 10% by weight; and a bonding unit derived from another monomer in the amount of 0 to 20% by weight, wherein ash content is 0.5% by weight or less, a total amount of magnesium and phosphorus in the ash is 30% by weight or more with respect to the total ash content, a ratio of the magnesium to the phosphorus ([Mg] / [P]) by weight is in the range of 0.4 to 2.5 by weight, and a Mooney viscosity (ML1+4,100°C) of the rubber is 10 to 150.

<Rubber Composition>

The rubber composition according to the present invention is characterized by that it contains a rubber component containing the acrylic rubber, a filler and a cross-linking agent.

As the rubber component which is the main component of the rubber composition of the present invention, the acrylic rubber of the present invention may be used alone, or if necessary, the acrylic rubber of the present invention may be used in combination with other rubber components. The content of the acrylic rubber of the present invention in the rubber composition may be selected according to the purpose of use of the composition, for example, usually 10% by weight or more, preferably 20% by weight or more, more preferably 30% by weight or more, particularly preferably 40% by weight or more, and most preferably 50% by weight or more.

Other rubber components to be used together with the acrylic rubber of the present invention are not particularly limited, and examples thereof include natural rubber, polybutadiene rubber, polyisoprene rubber, styrene-butadiene rubber, acrylonitrile-butadiene rubber, silicone rubber, fluororubber, olefin elastomers, styrene elastomers, vinyl chloride elastomers, polyester elastomers, polyamide elastomers, polyurethane elastomers, polysiloxane elastomers, and the like.

These other rubber components may be used alone or in combination of two or more. The shape of these other rubber components may be a vale, a sheet, a powder, or the like. The content of the other rubber component in the entire rubber component is appropriately selected within a range that does not impair the effects of the present invention, and it is, for example, usually 70% by weight or less, preferably 50% by weight or less, more preferably 30% by weight or less.

The filler contained in the rubber composition is not particularly limited, but examples thereof include a reinforcing filler and a non-reinforcing filler, and the reinforcing filler is preferable.

Examples of the reinforcing filler include: carbon black such as furnace black, acetylene black, thermal black, channel black and graphite; silica such as wet silica, dry silica and colloidal silica; and the like. Examples of non-reinforcing fillers include quartz powder, diatomaceous earth, zinc white, basic magnesium carbonate, activated calcium carbonate, magnesium silicate, aluminum silicate, titanium dioxide, talc, aluminum sulfate, calcium sulfate, barium sulfate, and the like.

These fillers can be used alone or in combination of two or more, and the compounding amount thereof, which is appropriately selected within a range that does not degrade the effects according to the present invention, is usually in the range of 1 to 200 parts by weight, preferably 10 to 150 parts by weight, more preferably 20 to 100 parts by weight, with respect to 100 parts by weight of the rubber component.

The cross-linking agent contained in the rubber composition is not particularly limited, but conventionally known cross-linking agents such as, for example, polyvalent amine compounds such as diamine compounds and carbonates thereof; sulfur compounds; sulfur donors; triazine thiol compounds; polyvalent epoxy compounds; organic carboxylic acid ammonium salts; organic peroxides; polyvalent carboxylic acids; quaternary onium salts; imidazole compounds; isocyanuric acid compounds; organic peroxide; triazine compounds; and the like can be used. Among these, the polyvalent amine compounds and the triazine compounds are preferable, and the polyvalent amine compounds are particularly preferable.

Examples of the polyvalent amine compound include: aliphatic polyvalent amine compounds such as hexamethylenediamine, hexamethylenediamine carbamate and N,N'-dicinnamylidene-1,6-hexanediamine; aromatic polyvalent amine compound such as 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene) dianiline, 4,4'-(p-phenylenediisopropylidene) dianiline, 2,2'-bis [4-(4-aminophenoxy) phenyl] propane, 4,4'-diaminobenzanilide, 4,4'-bis (4-aminophenoxy) biphenyl, m-xylylenediamine, p-xylylenediamine, 1,3,5-benzenetriamine, and the like; and the like. Among these, hexamethylenediamine carbamate, 2,2'-bis [4-(4-aminophenoxy) phenyl] propane, and the like are preferable. These polyvalent amine compounds are preferably used particularly in combination with the acrylic rubber containing a carboxyl group.

Examples of the triazine compound include 6-trimercapto-s-triazine, 2-anilino-4,6-dithiol-s-triazine, 1-dibutylamino-3,5-dimercaptotriazine, 2-dibutylamino-4, 6-dithiol-s-triazine, 1-phenylamino-3,5-dimercaptotriazine, 2,4,6-trimercapto-1,3,5-triazine, 1-hexylamino-3,5-dimercaptotriazine, and the like. Among these, the triazine compounds are preferably used particularly in combination with the acrylic rubber containing a halogen group.

These cross-linking agents may be used alone or in combination of two or more, and the compounding amount thereof is usually in the range of 0.001 to 20 parts by weight, preferably 0.1 to 10 parts by weight, more preferably 0.1 to 5 parts by weight, with respect to 100 parts by weight of the rubber component. By setting the compounding amount of the cross-linking agent to be in this range, it is possible to make the rubber elasticity sufficient while making the mechanical strength as the rubber cross-linked product excellent, which is preferable.

The rubber composition of the present invention may contain an anti-aging agent, if necessary. The type of anti-aging agent is not particularly limited, but examples thereof include: for example, phenolic anti-aging agents such as 2,6-di-t-butyl-4-methylphenol, 2,6-di-t-butylphenol, butylhydroxyanisole, 2,6-di-t-butyl-$\alpha$-dimethylamino-p-cresol, octadecyl-3-(3,5-di-t-butyl-4-hydroxyphenyl) propionate, styrenated phenol, 2,2'-methylene-bis(6-a-methyl-benzyl-p-cresol), 4,4'-methylenebis (2,6-di-t-butylphenol), 2,2'-methylene-bis(4-methyl-6-t-butylphenol), 2,4-bis [(octylthio) methyl]-6-methylphenol, 2,2'-thiobis-(4-methyl-6-t-butylphenol), 4,4'-thiobis-(6-t-butyl-o-cresol), 2,6-di-t-butyl-4-(4,6-bis (octylthio)-1,3,5-triazin-2-ylamino) phenol; phosphite type anti-aging agents such as tris (nonylphenyl) phosphite, diphenylisodecylphosphite, tetraphenyldipropyleneglycol diphosphite; sulfur esterbased anti-aging agents such as dilauryl thiodipropionate; amine-based anti-aging agents such as phenyl-$\alpha$-naphthylamine, phenyl-$\beta$-naphthylamine, p-(p-toluenesulfonylamide)-diphenylamine, 4,4'-($\alpha,\alpha$-dimethylbenzyl) diphenylamine, N, N-diphenyl-p-phenylenediamine, N-isopropyl-N'-phenyl-p-phenylenediamine and butyraldehyde-aniline condensates; imidazole anti-aging agents such as 2-mercaptobenzimidazole; quinoline anti-aging agents such as 6-ethoxy-2,2,4-trimethyl-1,2-dihydroquinoline; hydroquinone anti-aging agents such as 2,5-di-(t-amyl) hydroquinone; and the like. Among these, amine-based anti-aging agents are particularly preferable.

These anti-aging agents can be used alone or in combination of two or more, and the compounding amount thereof is in the range of 0.01 to 15 parts by weight, preferably 0.1 to 10 parts by weight, more preferably 1 to 5 parts by weight, with respect to 100 parts by weight of the rubber component.

The rubber composition of the present invention contains the rubber component containing the above-mentioned acrylic rubber of the present invention, a filler, a cross-linking agent, as essential components, and, if necessary, an anti-aging agent. The rubber composition of the present invention may further optionally contain other additives, if necessary, commonly used in the art, for example, a cross-linking aid, a cross-linking accelerator, a cross-linking retarder, a silane coupling agent, a plasticizer, a processing aid, lubricants, pigments, colorants, antistatic agents, foaming agents and the like. These other compounding agents may be used alone or in combination of two or more, and the compounding amount thereof is appropriately selected within a range that does not degrade the effects of the present invention.

Examples of the method for producing the rubber composition of the present invention include a method of mixing the rubber component containing the acrylic rubber of the present invention with a filler, a cross-linking agent, and, an anti-aging agent and other compounding agents which can be optionally contained. For mixing, any means conventionally may be used in the field of rubber processing, such as an open roll, a Banbury mixer, various kneaders, and the like can be used. The mixing of the respective components can be performed in a normal procedure performed in the field of processing rubber. It is preferable, for example, that components difficult to react or decompose with heat are sufficiently mixed, and then thereafter, a cross-linking agent, which is a component that easily reacts or decomposes with heat, and the like are mixed for a short at a temperature that reaction and decomposition does not occur.

<Rubber Cross-linked Product>

The rubber cross-linked product of the present invention is obtained by cross-linking the above rubber composition.

The rubber cross-linked product of the present invention can be produced by molding the rubber composition of the present invention by a molding machine applicable for a desired shape, for example, an extruder, an injection molding machine, a compressor or a roll, occurring a cross-linking reaction by heating, and fixing the shape as a rubber cross-linked product. In this case, the molding may be performed in advance and then cross-linked, or the molding and the cross-linking may be performed simultaneously. The molding temperature is usually 10 to 200°C, preferably 25 to 150°C. The cross-linking temperature is usually 100 to 250°C, preferably 130 to 220°C, more preferably 150 to 200°C. The cross-linking time is usually 0.1 minutes to 10 hours, preferably 1 minute to 5 hours. As a heating method, a method used for cross-linking rubber such as press heating, steam heating, oven heating, and hot air heating may be appropriately selected.

The rubber cross-linked product of the present invention may be further heated for secondary cross-linking depending on the shape and size of the rubber cross-linked product. The secondary cross-linking varies depending on the heating method, the cross-linking temperature, the shape, and the like, but the secondary cross-linking is preferably performed for 1 to 48 hours. The heating method and heating temperature may be appropriately selected.

The rubber cross-linked product of the present invention has excellent compression set resistance and water resistance while maintaining basic properties such as tensile strength, elongation and hardness as a rubber.

Taking advantage of the above-mentioned properties, a rubber cross-linked product according to the present invention is preferably used as: for example, sealing materials such as an O-ring, a packing, a diaphragm, an oil seal, a shaft seal, a bearing seal, a mechanical seal, a well head seal, an electric / electronic device seal, an air compression device seal; various kinds of gaskets such as a rocker cover gasket mounted on a connecting portion between a cylinder block and a cylinder head, an oil pan gasket mounted on a connecting portion between an oil pan and a cylinder head or a transmission case, a gasket for a fuel cell separator mounted between a pair of housings sandwiching a unit cell including a positive electrode, an electrolyte plate and a negative electrode, a gasket for hard disk drive top covers; cushioning materials, anti-vibration materials; electric wire coating materials; industrial belts; tubes and hoses; sheets; and the like.

The rubber cross-linked product of the present invention is also used as an extrusion-molded product and mold cross-linked product used for automobiles for example, various hoses such as: fuel oil system hoses for fuel tank such as a fuel hose, a filler neck hose, a vent hose, a vapor hose, an oil hose, and the like; air system hoses such as a turbo air hose, a mission control hose, and the like; radiator hoses; heater hoses; brake hoses; air conditioner hoses; and the like.

<Device Configuration used for Production of Acrylic Rubber >

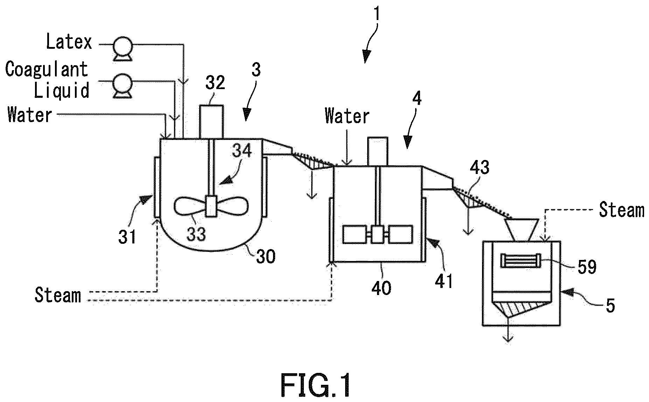

Next, a device configuration used for manufacturing the acrylic rubber according to one embodiment of the present invention will be described. FIG. 1 is a diagram schematically showing an example of an acrylic rubber production system having a device configuration usable for producing an acrylic rubber according to one embodiment of the present invention. For producing the acrylic rubber according to the present invention, for example, the acrylic rubber production system 1 shown in FIG. 1 can be used.

The acrylic rubber production system 1 shown in FIG. 1 is composed of an emulsion polymerization reactor (not shown), a coagulation device 3, a washing device 4, a drainer 43, and a screw-type extruder.

The emulsion polymerization reactor is configured to perform the above-mentioned emulsion polymerization process. Although not shown in FIG. 1, this emulsion polymerization reactor has, for example, a polymerization reaction tank, a temperature control unit for controlling a reaction temperature, and a stirring device provided with a motor and a stirring blade. In the emulsion polymerization reactor, water and an emulsifier, which is a divalent phosphate ester salt, are mixed with a monomer component for forming an acrylic rubber, and the mixture is emulsified while being appropriately stirred by a stirrer, and emulsion polymerization is performed in the presence of a polymerization catalyst, thereby to obtain emulsion polymerization liquid, that is latex. The emulsion polymerization reactor may be a batch type, a semi-batch type or a continuous type, and may be a tank-type reactor or a tube-type reactor.

The coagulation device 3 shown in FIG. 1 is configured to perform the process related to the coagulation process described above. As schematically shown in FIG. 1, the coagulation device 3 includes, for example, a stirring tank 30, a heating unit 31 that heats the inside of the stirring tank 30, a temperature control unit (not shown) that controls the temperature inside the stirring tank 30, a stirring device 34 having a motor 32 and a stirring blade 33, and a drive control unit (not shown) that controls the rotation number and the rotation speed of the stirring blade 33. In the coagulation device 3, a hydrous crumb can be produced by bringing the emulsion polymerization liquid prepared in the emulsion polymerization reactor into contact with an aqueous solution of a magnesium salt as a coagulant to coagulate the emulsion polymerization liquid.

In the coagulation device 3, for example, the contact between the emulsion polymerization liquid, which is indicated as latex in FIG.1, and the magnesium salt aqueous solution is performed by adding the emulsion polymerization liquid to the stirred magnesium salt aqueous solution. This means that the stirring tank 30 of the coagulation device 3 is filled with the magnesium salt aqueous solution, and the emulsion polymerization liquid is added to and brought into contact with the magnesium salt aqueous solution to coagulate the emulsion polymerization liquid, thereby generating a hydrous crumb.

The heating unit 31 of the coagulation device 3 is configured to heat the magnesium salt aqueous solution with which the stirring tank 30 is filled. Further, the temperature control unit of the coagulation device 3 is configured to control the temperature inside the stirring tank 30 by controlling the heating operation by the heating unit 31 while monitoring the temperature inside the stirring tank 30 measured by a thermometer. The temperature of the magnesium salt aqueous solution in the stirring tank 30 is controlled by the temperature control unit to be usually in the range of 40°C or higher, preferably 40 to 90°C, more preferably 50 to 80°C.

The stirring device 34 of the coagulation device 3 is configured to stir the magnesium salt aqueous solution filled in the stirring tank 30. Specifically, the stirring device 34 includes a motor 32 that generates rotational power, and a stirring blade 33 that extends in a direction perpendicular to the rotation axis of the motor 32. The stirring blades 33 can rotate in the magnesium salt aqueous solution filled in the stirring tank 30 about the rotation axis by the rotation power of the motor 32 to flow the magnesium salt aqueous solution. The shape and size of the stirring blade 33, the number of installations, and the like are not particularly limited.

The drive control unit of the coagulation device 3 is configured to control the rotational drive of the motor 32 of the stirring device 34 and set the rotation number and the rotation speed of the stirring blades 33 of the stirring device 34 to predetermined values. The rotation speed of the stirring blade 33 is controlled by the drive controller so that the stirring speed of the magnesium salt aqueous solution is controlled to be, for example, usually in the range of 100 rpm or more, preferably 200 to 1,000 rpm, more preferably 300 to 900 rpm, and particularly preferably 400 to 800 rpm. The rotation of the stirring blade 33 is controlled by the drive controller so that the peripheral speed of the magnesium salt aqueous solution is usually 0.5 m/s or higher, preferably 1 m/s or higher, more preferably 1.5 m/s or higher, particularly preferably 2 m/s or higher, most preferably 2.5 m/s or higher. Further, the rotation of the stirring blade 33 is controlled by the drive control unit so that the upper limit of the peripheral speed of the magnesium salt aqueous solution is usually 50 m/s or less, preferably 30 m/s or less, more preferably 25 m/s or less, and most preferably 20 m/s or less.

The washing device 4 shown in FIG. 1 is configured to perform the above-described washing process. As schematically shown in FIG. 1, the washing device 4 includes, for example, a washing tank 40, a heating unit 41 that heats the inside of the washing tank 40, and a temperature control unit (not shown) that controls the temperature inside the washing tank 40. In the washing device 4, by mixing the hydrous crumbs produced in the coagulation device 3 with a large amount of water for washing, the ash content in the finally obtained acrylic rubber can be effectively reduced.

The heating unit 41 of the washing device 4 is configured to heat the inside of the washing tank 40. In addition, the temperature control unit of the washing device 4 controls the temperature inside the washing tank 40 by controlling the heating operation by the heating unit 41 while monitoring the temperature inside the washing tank 40 measured by the thermometer. As described above, the temperature of the washing water in the washing tank 40 is controlled to be usually in the range of 40°C or higher, preferably 40 to 100°C, more preferably 50 to 90°C, and most preferably 60 to 80°C.

The hydrous crumb washed in the washing device 4 is supplied to the screw-type extruder 5 which performs a dehydration process and a drying process. At this time, it is preferable that the hydrous crumb after washing is supplied to the screw-type extruder 5 through a drainer 43 capable of separating free water. For the drainer 43, for example, a wire mesh, a screen, an electric sifter, or the like can be used.

Further, when the hydrous crumb after washing is supplied to the screw-type extruder 5, the temperature of the hydrous crumb is preferably 40°C or higher, more preferably 60°C or higher. For example, by setting the temperature of water used for washing in the washing device 4 to 60°C or higher (for example, 70°C), so that the temperature of the hydrous crumb when supplied to the screw-type extruder 5 is maintained at 60°C or higher. Otherwise, the hydrous crumb may be heated to a temperature of 40°C or higher, preferably 60°C or higher when being conveyed from the washing device 4 to the screw-type extruder 5. This makes it possible to effectively perform the dehydration process and the drying process, which are the subsequent processes, and to significantly reduce the water content of the finally obtained dried rubber.

The screw-type extruder 5 shown in FIG. 1 is configured to perform the processes related to the aforementioned dehydration process and the drying process. Although a screw-type extruder 5 is illustrated in FIG. 1 as a suitable example, a centrifuge, a squeezer, or the like may be used as a dehydrator that performs the process related to the dehydration process, and a hot air dryer, a reduced pressure dryer, an expander dryer, a kneader type dryer or the like may be used as a dryer that performs the process related to the drying process.

The screw-type extruder 5 is configured to mold the dried rubber obtained through the dehydration process and the drying process into a predetermined shape and to discharge the dried rubber. Specifically, the screw-type extruder 5 is provided with: a dehydration barrel section 53 having a function as a dehydrator to dehydrate the hydrous crumb washed by the washing device 4; a drying barrel section 54 having a function as a dryer for drying the hydrous crumb; and a die 59 having a molding function to mold a hydrous crumb on the downstream side of the screw-type extruder 5.

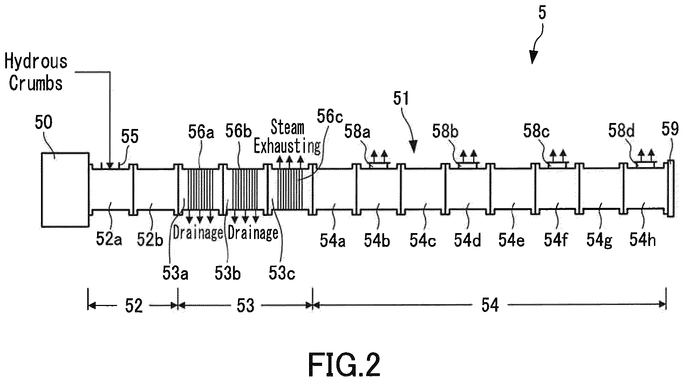

The configuration of the screw-type extruder 5 will be described below with reference to FIG. 2. FIG. 2 shows the configuration of a specific suitable example as the screw-type extruder 5 shown in FIG. 1. By the screw-type extruder 5, the above-described dehydration process and drying process can be suitably performed.

The screw-type extruder 5 shown in FIG. 2 is a twin-screw-type extruder / dryer including a pair of screws (not shown) in a barrel unit 51. The screw-type extruder 5 has a drive unit 50 that rotationally drives a pair of screws in the barrel unit 51. The drive unit 50 is attached to an upstream end (left end in FIG. 2) of the barrel unit 51. Further, the screw-type extruder 5 has a die 59 at a downstream end (right end in FIG. 2) of the barrel unit 51.

The barrel unit 51 has a supply barrel section 52, a dehydration barrel section 53, and a drying barrel section 54 from the upstream side to the downstream side (from the left side to the right side in FIG. 2).

The supply barrel section 52 is composed of two supply barrels, which are a first supply barrel 52a and a second supply barrel 52b.

Further, the dehydration barrel section 53 is composed of three dehydration barrels, which are a first dehydration barrel 53a, a second dehydration barrel 53b and a third dehydration barrel 53c.

The drying barrel section 54 includes eight drying barrels, which are a first drying barrel 54a, a second drying barrel 54b, a third drying barrel 54c, a fourth drying barrel 54d, a fifth drying barrel 54e, a sixth drying barrel 54f, a seventh drying barrel 54g, and an eighth drying barrel 54h.

Thus, the barrel unit 51 is configured by connecting the 13 divided barrels 52a to 52b, 53a to 53c, and 54a to 54h from the upstream side to the downstream side.

Further, the screw-type extruder 5 has a heating means (not shown) to individually heat each of the barrels 52a to 52b, 53a to 53c, and 54a to 54h. The hydrous crumbs in each of the barrels 52a to 52b, 53a to 53c, and 54a to 54h are heated to a predetermined temperature by the heating means. The heating means is provided with a number corresponding to each barrel 52a to 52b, 53a to 53c, 54a to 54h. As such a heating means, for example, a configuration in which high temperature steam is supplied from a steam supply means to a steam distribution jacket formed in each barrel 52a to 52b, 53a to 53c, 54a to 54h is adopted, but the configuration is not limited to this. Further, the screw-type extruder 5 has a temperature control means (not shown) to control the set temperature of each heating means corresponding to each barrel 52a to 52b, 53a to 53c, 54a to 54h.

It should be noted that the number of installations of supply barrels, dehydration barrels, and drying barrels constituting the barrel sections 52, 53, and 54 of the barrel unit 51 is not limited to the embodiment shown in FIG.2, but the number can be set in accordance with the water content of the hydrous crumbs of the acrylic rubber to be dried and the like.

For example, the number of supply barrels installed in the supply barrel section 52 is, for example, 1 to 3. Further, the number of dehydration barrels installed in the dehydration barrel section 53 is preferably, for example, 2 to 10, and more preferably 3 to 6, since the hydrous crumbs of the sticky acrylic rubber can be efficiently dehydrated.

Further, the number of the drying barrels installed in the drying barrel section 54 is, for example, preferably 2 to 10, and more preferably 3 to 8.

The pair of screws in the barrel unit 51 are rotationally driven by a driving means such as a motor stored in the driving unit 50. The pair of screws, extending from the upstream side to the downstream side in the barrel unit 51, is rotationally driven so that the pair of screws can convey the hydrous crumbs to the downstream side while mixing the hydrous crumbs supplied to the supply barrel section 52. The pair of screws is preferably a biaxial meshing type in which peaks and troughs are meshed with each other, whereby the dehydration efficiency and drying efficiency of the hydrous crumbs can be increased.

Further, the rotation direction of the pair of screws may be the same direction or different directions, but from the viewpoint of self-cleaning performance, a type that rotates in the same direction is preferable. The screw shape of the pair of screws is not particularly limited and may be any shape required for each barrel section 52, 53, 54.

The supply barrel section 52 is an area for supplying the hydrous crumbs into the barrel unit 51. The first supply barrel 52a of the supply barrel section 52 has a feed port 55 provided therewith for supplying the hydrous crumbs into the barrel unit 51.

The dehydration barrel section 53 is an area for separating and discharging a liquid (serum water) containing a coagulant from hydrous crumbs.

The first to third dehydration barrels 53a to 53c, constituting the dehydration barrel section 53, have dehydration slits 56a, 56b and 56c for discharging the moisture of the hydrous crumbs to the outside, respectively. A plurality of dehydrating slits 56a, 56b, 56c are formed in each of the dehydration barrels 53a to 53c.

The slit width of each dehydration slit 56a, 56b, 56c, that is, the opening may be appropriately selected according to the use conditions, and is usually 0.01 to 5 mm. It is preferably 0.1 to 1 mm, and more preferably 0.2 to 0.6 mm, from the viewpoint that the loss of the hydrous crumb is small and the dehydration of hydrous crumb can be efficiently performed.

There are two cases to remove water from the hydrous crumbs in the dehydration barrels 53a to 53c of the dehydration barrel section 53, which are a case to remove water in a liquid form from each of the dehydration slits 56a, 56b and 56c and to a case to remove water in a vapor state. In the dehydration barrel section 53 of the present embodiment, for distinction of the two cases, the case of removing water in a liquid state is defined as drainage, and the case of removing in a vapor state is defined as steam exhausting.

In the dehydration barrel section 53, it is preferable to use drainage and steam exhausting in combination, since it is possible to efficiently reduce the water content of the sticky acrylic rubber. In the dehydration barrel section 53, which of the first to third dehydration barrels 53a to 53c is to be used for drainage or discharging steam may be appropriately set according to the purpose of use, but it is preferable to increase the number of dehydration barrels for drainage in a case of reducing ash in usually produced acrylic rubber. In that case, for example, as shown in FIG. 2, the first and second dehydration barrels 53a and 53b on the upstream side perform drainage, and the third dehydration barrel 53c on the downstream side performs steam exhausting. Further, for example, when the dehydration barrel section 53 has four dehydration barrels, a mode in which, for example, three upstream dehydration barrels perform drainage and one downstream dehydration barrel performs steam exhausting can be considered. On the other hand, in the case of reducing the water content, it is advantageous to increase the number of dehydration barrels for steam exhausting.

The set temperature of the dehydration barrel section 53 is usually in the range of 60 to 150°C, preferably 70 to 140°C, and more preferably 80 to 130°C, as described in the dehydration / drying process above. The set temperature of the dehydration barrel for dehydration in a drained state is usually in the range of 60 to 120°C, preferably 70 to 110°C, more preferably 80 to 100°C, and the set temperature of the dehydration barrel for dehydration in the steam exhausting state is usually in the range of 100 to 150°C, preferably 105 to 140°C, more preferably 110 to 130°C.

The drying barrel section 54 is an area for drying the hydrous crumbs after dehydration under reduced pressure. Out of the first to eighth drying barrels 54a to 54h forming the drying barrel section 54, the second drying barrel 54b, the fourth drying barrel 54d, the sixth drying barrel 54f, and the eighth drying barrel 54h are provided with vent ports 58a, 58b, 58c, 58d for deaeration, respectively. A vent pipe (not shown) is connected to each of the vent ports 58a, 58b, 58c, 58d.

A vacuum pump (not shown) is connected to the end of each vent pipe, and the inside of the drying barrel section 54 is depressurized to a predetermined pressure by the operation of these vacuum pumps. The screw-type extruder 5 has pressure control means (not shown) for controlling the operation of the vacuum pumps and controlling the degree of pressure reduction in the drying barrel section 54.

The degree of pressure reduction in the drying barrel section 54 may be appropriately selected, but as described above, it is usually set to 1 to 50 kPa, preferably 2 to 30 kPa, and more preferably 3 to 20 kPa.

The set temperature in the drying barrel section 54 may be appropriately selected, but as described above, it is usually set to 100 to 250°C, preferably 110 to 200°C, and more preferably 120 to 180°C.

In each of the drying barrels 54a to 54h forming the drying barrel section 54, the temperature thereof may be set to an approximate value of all the drying barrels 54a to 54h or different values, but it is preferable to set the temperature of the downstream side (the side of the die 59) higher than the temperature of the upstream side (the side of the dehydration barrel section 53), since the drying efficiency is improved.

The die 59 is a mold arranged at the downstream end of the barrel unit 51 and has a discharge port having a predetermined nozzle shape. The acrylic rubber dried in the drying barrel section 54 passes through the discharge port of the die 59 to be extruded into a shape corresponding to the predetermined nozzle shape. The acrylic rubber passing through the die 59 is formed into various shapes such as a granular shape, a columnar shape, a round bar shape, and a sheet shape depending on the nozzle shape of the die 59. A breaker plate or a wire net may or may not be provided between the screw and the die 59.

The hydrous crumbs of acrylic rubber obtained through the washing process are supplied to the supply barrel section 52 from the feed port 55. The hydrous crumbs supplied to the supply barrel section 52 are sent from the supply barrel section 52 to the dehydration barrel section 53 by rotation of a pair of screws in the barrel unit 51. In the dehydration barrel section 53, as described above, the water contained in the hydrous crumbs is drained or the steam is discharged from the dehydration slits 56a, 56b, and 56c provided in the first to third dehydration barrels 53a to 53c, respectively, so that the hydrous crumbs are dehydrated.

The hydrous crumbs dehydrated in the dehydration barrel section 53 are sent to the drying barrel section 54 by rotation of a pair of screws in the barrel unit 51. The hydrous crumbs sent to the drying barrel section 54 are plasticized and mixed to form a melt, which is conveyed to the downstream side while being heated. Then, the water contained in the melt of the acrylic rubber is vaporized, and the water (vapor) is discharged to the outside through vent pipes (not shown) connected to the vent ports 58a, 58b, 58c, 58d.

By passing through the drying barrel section 54 as described above, the hydrous crumbs are dried to become a melt of acrylic rubber, so that the acrylic rubber is supplied to the die 59 by the rotation of a pair of screws in the barrel unit 51 is extruded from the die 59.

Hereinafter, an example of operating conditions of the screw-type extruder 5 according to the present embodiment will be described.

The rotation speed (N) of the pair of screws in the barrel unit 51 may be appropriately selected according to various conditions, and is usually 10 to 1,000 rpm, and since the water content of the acrylic rubber and the gel amount can be efficiently reduced, the rotation speed (N) of the pair of screws in the barrel unit 51 is preferably 50 to 750 rpm, more preferably 100 to 500 rpm, and most preferably 120 to 300 rpm.

The extrusion rate (Q) of the acrylic rubber is not particularly limited, but it is usually 100 to 1,500 kg/hr, preferably 300 to 1,200 kg/hr, more preferably 400 to 1,000 kg/hr, and most preferably 500 to 800 kg/hr.

The ratio (Q / N) of the extrusion amount (Q) of the acrylic rubber to the rotation speed (N) of the screw is not particularly limited, but it is usually 1 to 20, preferably 2 to 10, and more preferably 3 to 8, and particularly preferably 4 to 6.

As described above, the dry rubber discharged from the screw-type extruder 5 is extruded into various shapes such as a granular shape, a columnar shape, a round bar shape and a sheet shape depending on the nozzle shape of the die 59.

[EXAMPLES]

The present invention will be described more specifically below with reference to Examples and Comparative Examples. In addition, "part", "%" and "ratio" in each example are based on weight unless otherwise specified. Various chemical or physical properties were evaluated according to the following methods.

[Monomer Composition]

Regarding the monomer composition in the acrylic rubber, the monomer composition of each monomer unit in the acrylic rubber was confirmed by H-NMR, and existence of the activity of the reactive group remained in the acrylic rubber and the content of the reactive group were confirmed by the following method. Further, the content ratio of each monomer unit in the acrylic rubber was calculated from the amount of each monomer used in the polymerization reaction and the polymerization conversion rate. Specifically, the content ratio of each monomer unit in the rubber was regarded as the same as the amount of each monomer used, since the polymerization reaction was an emulsion polymerization reaction, and the polymerization conversion rate was about 100% in which no unreacted monomer could be confirmed.

[Reactive Group Content]

The content of the reactive group in the acrylic rubber was measured by the following method:

    (1) The amount of carboxyl group was calculated by dissolving the sample (acrylic rubber) in acetone and performing potentiometric titration with a potassium hydroxide solution.
    (2) The amount of epoxy groups was calculated by dissolving the sample in methyl ethyl ketone, adding a specified amount of hydrochloric acid thereto to react with epoxy groups, and titrating the amount of residual hydrochloric acid with potassium hydroxide.

(3) The amount of chlorine was calculated by completely burning the sample in a combustion flask, absorbing the generated chlorine in water, and titrating with silver nitrate.

[Ash Content]

The ash content (%) contained in the acrylic rubber was measured according to JIS K6228 A method.

[Ash Component Content]

The amount of each of the components (ppm) in the ash of the acrylic rubber was measured by XRF using a ZSX Primus (manufactured by Rigaku Corporation) by pressing the ash collected during the above-mentioned ash content measurement onto a titration filter paper having a diameter of 20 mm.

[Molecular Weight and Molecular Weight Distribution]

The weight average molecular weight (Mw) and the molecular weight distribution (Mz / Mw) of the acrylic rubber are an absolute molecular weight and an absolute molecular weight distribution focused on a polymer field, respectively, measured by the GPC-MALS method in which a solution in which 0.05 mol / L of lithium chloride and 0.01% of 37% concentrated hydrochloric acid are added to dimethylformamide is used as a solvent. To be specific, a multi-angle laser light scattering photometer (MALS) and a refractive index detector (RI) were incorporated into a GPC (Gel Permeation Chromatography) device, and the light scattering intensity and the difference in the refractive index of the molecular chain solution size-separated were measured by the GPC device by following the elution time, so that the molecular weight of the solute and its content rate were sequentially calculated and determined. The measurement conditions and the measurement method by the GPC device are as follows:

Column: TSKgel $\alpha$-M 2 pieces ($\varphi$7.8 mm$\times$30 cm, manufactured by TOSOH CORPORATION)
Column temperature: 40°C
Flow rate: 0.8 ml/mm
Sample preparation: 5 ml of solvent was added to 10 mg of the sample, and the mixture was gently stirred at room temperature (dissolution was visually confirmed). Thereafter, filtration was performed using a 0.5 $\mu$m filter.

[Glass Transition Temperature (Tg)]

The glass transition temperature (Tg) of the acrylic rubber was measured using a differential scanning calorimeter (DSC, product name "X-DSC7000", manufactured by Hitachi High-Tech Science Corporation).

[Gel Amount]

The gel amount (%) of the acrylic rubber is the amount of insoluble matter in methyl ethyl ketone, and was determined by the following method:
About 0.2 g of acrylic rubber sheet was weighed (X g), immersed in 100 ml of methyl ethyl ketone, left at room temperature for 24 hours, and then a filtrate obtained by filtering out the insoluble matter in methyl ethyl ketone using an 80 mesh wire net, that is, a filtrate in which only the rubber component soluble in methyl ethyl ketone was dissolved. The dry solid content (Y g) obtained by evaporating and drying and coagulating the filtrate was weighed and calculated by the following formula.

$$\text{Gel amount (\%)} = 100 \times (\text{X-Y}) / \text{X}$$

[Water Content]

The water content (%) was measured according to JIS K6238-1: Oven A (volatile content measurement) method.

[pH]

The pH was measured with a pH electrode after dissolving 6 g ($\pm$ 0.05 g) of acrylic rubber in 100 g of tetrahydrofuran and adding 2.0 ml of distilled water to confirm that the acrylic rubber was completely dissolved.

[Complex Viscosity]

The temperature dispersion (40 to 120°C) was measured at a strain of 473% and 1 Hz using a dynamic viscoelasticity measuring device "Rubber Process Analyzer RPA-2000" (manufactured by Alpha Technology Co., Ltd.), and the complex viscosity η at each temperature was determined. Here, of the above-mentioned dynamic viscoelasticities, the dynamic viscoelasticity at 60°C is defined as the complex viscosity η (60°C), and the dynamic viscoelasticity at 100°C is defined as the complex viscosity η (100°C), and the value of the ratio η (100°C) / η (60°C) was calculated.

[Mooney Viscosity (ML1+4,100°C)]

The Mooney viscosity (ML1+4,100°C) was measured according to the JIS K6300 uncross-linked rubber physical test method.

[Water Resistance Evaluation]

Regarding the water resistance of the rubber sample, the cross-linked product of the rubber sample was immersed in a distilled water at a temperature of 85°C for 100 hours in accordance with JIS K6258 to perform an immersion test, and the volume change rate before and after immersion was calculated according to the following formula. The evaluation was performed by an index with Comparative Example 2 being 100 (the smaller the index, the more excellent in the water resistance).
Volume change rate before and after immersion (%) = ((test piece volume after immersion - test piece volume before immersion) / test piece volume before immersion) $\times$ 100

[Storage Stability Evaluation]

Regarding the storage stability of the rubber sample, the rubber sample was put into a constant temperature and humidity chamber of 45°C $\times$ 80% RH (SH-222 manufactured by ESPEC CORP.), and the change rate of water content before and after the 7-day test was calculated. The evaluation was made by an index where Comparative Example 2 being 100 (the smaller the index, the better the storage stability). In addition, in order to observe the adverse effect caused by the change of the water content, the Mooney scorch minimum viscosity (Vm) of the acrylic rubber mixture was measured by using the acrylic rubber before and after the 7-day test using the constant temperature and humidity chamber of 45°C $\times$80% RH. The evaluation was made by calculating the rate of change of the viscosity (Vm). The Vm change rate was evaluated by an index with the change rate of Comparative Example 2 being 100 (the smaller the index, the better the storage stability). The Mooney scorch minimum viscosity (Vm) was measured at 125°C using an L rotor according to JIS K6300-1: 2013. The rate of change of the viscosity (Vm) cannot be compared unless the crosslink densities are unified, and therefore, the measured values of Examples 3 to 5 and Comparative Example 1 which were the same as those of the acrylic rubber of Comparative Example 2 were expressed by an index and evaluated in the present specification.

[Example 1]

46 parts of pure water, 48.25 parts of ethyl acrylate as a monomer component, 50 parts of n-butyl acrylate and 1.75 parts of mono-n-butyl fumarate, and 1.8 parts of octyloxydioxyethylene phosphate sodium salt as an emulsifier were mixed in a mixing container provided with a homomixer, and stirred, thereby to obtain a monomer emulsion.
170 parts of pure water and 3 parts of the monomer emulsion obtained as mentioned above were put into a polymerization reaction tank provided with a thermometer and a stirrer, and cooled to 12°C under a nitrogen stream. Subsequently, the rest of the monomer emulsion, 0.00033 part of ferrous sulfate, 0.264 part of sodium ascorbate, and 0.22 part of potassium persulfate were continuously dropped into the polymerization reaction tank over 3 hours. Thereafter, the reaction was continued while maintaining the temperature in the polymerization reaction tank at 23°C, and upon the confirmation that the polymerization conversion rate reached about 100%, hydroquinone as a polymerization terminator was added to terminate the polymerization reaction, and the emulsion polymerization liquid was obtained.
Subsequently, in a coagulation tank provided with a thermometer and a stirring device, 350 parts of a 2% magnesium sulfate aqueous solution (a coagulant liquid using magnesium sulfate as a coagulant) was heated to 80°C and vigorously stirred with stirring blades of the stirring device at a rotation speed of 600 rpm (peripheral speed of 3.1 m/s). The obtained above emulsion polymerization liquid heated to 80°C was continuously added to the magnesium sulfate aqueous solution, so that the polymer was coagulated, thereby to obtain a coagulated slurry containing acrylic rubber crumbs, which was a coagulum, and water. Water was discharged from the coagulation tank while filtering off the crumbs from the obtained slurry, so that hydrous crumbs were obtained. Each ratio of the obtained hydrous crumbs was measured using a JIS classifying sieve, and the results are shown in Table 2.

194 parts of hot water (70°C) was added to the coagulation tank in which the filtered hydrous crumbs remained, and the mixture was stirred for 15 minutes to wash the hydrous crumbs, and then water was discharged, and again 194 parts of hot water (70°C) was added and the mixture was stirred for 15 minutes to wash the hydrous crumbs (total washing number is 2 times). The washed hydrous crumbs were dried with a hot air dryer at 160°C to obtain an acrylic rubber (A) having a water content of 0.4% by weight. The reactive group content, ash content, ash component content, gel amount, water content, and Mooney viscosity (ML1+4,100°C) of the obtained acrylic rubber (A) were measured and the results are shown in Table 2. Further, the rate of change in water content of the acrylic rubber (A) before and after the storage stability test was measured, and the results are shown in Table 2.

Subsequently, regarding the acrylic rubber (A), 100 parts of the acrylic rubber (A) before the storage stability test and 100 parts of the acrylic rubber (A) after the same test, were respectively put into a Banbury mixer together with a compounding agent A of "Composition 1" shown in Table 1, and mixed for 5 minutes at 50°C (first stage mixing).

Each of the mixtures obtained in the first-stage mixing was transferred to a roll of 50°C, compounding agent B of "Composition 1" was mixed again (second-stage mixing) to obtain a rubber mixture. The Mooney scorch minimum viscosity (Vm) of each of the obtained rubber mixtures was measured to calculate the change rate, and the results are shown in Table 2.

[Table 1]

| Combination of acrylic rubber mixture | | | Carboxyl Group | Epoxy Group | Halogen Group Carboxyl Group | |
|---|---|---|---|---|---|---|
| Reactive Group | | | Carboxyl Group | Epoxy Group | Halogen Group Carboxyl Group | |
| Composition (Parts) | | | Composition 1 | Composition 2 | Composition 3 | Composition 4 |
| Compounding Agent A | | Acrylic Rubber | 100 | 100 | 100 | 100 |
| | | SEAST3(HAF) ※1 | 60 | 60 | 60 | 60 |
| | | Stearic Acid | 1 | 1 | 1 | 1 |
| | | Ester Wax | 1 | 1 | 1 | 1 |
| | | NOCRAC CD ※2 | 2 | 2 | 2 | 2 |
| Compounding Agent B | | Hexamethylenediamine carbamate | 0.6 | | - | 0.5 |
| | | Rhenogran®XLA-60 ※3 (Synthetic mixture of active amine and retarder) | 2 | - | - | 2 |
| | | Ammonium benzoate | - | 1.5 | | |
| | | Zinc dibutyldithiocarbamate | - | - | 1.5 | - |
| | | 2,4,6-Trimercapto-s-triazine | - | - | 0.5 | - |
| | | N- (cyclohexylthio) phthalimide | - | - | 0.2 | - |
| | | Diethylthiourea | - | - | 0.3 | - |
| ※1: SEAST3 (HAF) in the table is carbon black (made by Tokai Carbon Co., Ltd.). ※2: The Nocrac CD in the table is 4,4'-bis ($\alpha$, $\alpha$-dimethylbenzyl) diphenylamine : made by OUCHI SHINKO CHEMICAL INDUSTRIAL CO.,LTD.). ※3: Rhenogran® XLA-60 in the table is a vulcanization accelerator (made by LANXESS CO..LTD.). | | | | | | |

The rubber mixture obtained by using the acrylic rubber (A) before the storage stability test was put into a mold having a length of 15 cm, a width of 15 cm, and a depth of 0.2 cm, and a primary cross-linking was performed by pressurizing at a pressure of 10 MPa while pressing for 10 minutes at 180°C, and then a secondary cross-linking was performed by further heating the obtained primary cross-linked product in a gear-type oven for 2 hours at 180°C, thereby to obtain a sheet-shaped rubber cross-linked product. Then, a water resistance test was conducted by cutting out a test piece of 3 cm × 2 cm × 0.2 cm from the obtained sheet-shaped rubber cross-linked product, and the results are shown in Table 2.

[Example 2]

An acrylic rubber (B) was obtained in the same manner as in Example 1 except that the monomer component was changed to 28 parts of ethyl acrylate, 38 parts of n-butyl acrylate, 27 parts of methoxyethyl acrylate, 5 parts of acrylonitrile and 2 parts of allyl glycidyl ether, and the emulsifier was changed to nonylphenylhexaoxyethylene phosphate sodium salt, and the properties (the compounding agent was changed to "Composition 2") of the acrylic rubber (B) were evaluated. The results are shown in Table 2.

[Example 3]

An acrylic rubber (C) was obtained in the same manner as in Example 1 except that the monomer component was changed to 42.2 parts of ethyl acrylate, 35 parts of n-butyl acrylate, 20 parts of methoxyethyl acrylate, 1.5 parts of acrylonitrile and 1.3 parts of vinyl chloroacetate, and the emulsifier was changed to tridecyloxyhexaoxyethylene phosphate sodium salt, and the properties (the compounding agent was changed to "Composition 3") of the acrylic rubber (C) were evaluated. The results are shown in Table 2.

[Example 4]

An acrylic rubber (D) was obtained in the same manner as in Example 3 except that the rotation speed of the coagulant liquid (the rotation speed of the stirring blade of the stirring device) was changed to 100 rpm (the peripheral speed was 0.5 m/s), and the properties of the acrylic rubber (D) were evaluated. The results are shown in Table 2.

[Example 5]

An acrylic rubber (E) was obtained in the same manner as in Example 4 except that the magnesium sulfate concentration of the magnesium sulfate aqueous solution, which is a coagulant liquid, was changed to 0.7%, and the properties of the acrylic rubber (E) were evaluated. The results are shown in Table 2.

[Comparative Example 1]

An acrylic rubber (F) was obtained in the same manner as in Example 5 except that 0.7% magnesium sulfate aqueous solution was added to the emulsion polymerization liquid to perform the coagulation reaction, and the properties of the acrylic rubber (F) were evaluated. The results are shown in Table 2.

[Comparative Example 2]

An acrylic rubber (G) was obtained in the same manner as in Comparative Example 1 except that the emulsifier was changed to 0.709 parts of lauryl sulfate sodium salt and 1.82 parts of polyoxyethylene dodecyl ether, the coagulant liquid was changed to 0.7% sodium sulfate aqueous solution, and the washing method was changed to a method in which 194 parts of industrial water was added with respect to 100 parts of hydrous crumbs after the coagulation reaction, stirred at 25°C for 5 minutes in the coagulation tank, thereafter, the washing of the hydrous crumbs by discharging water from the coagulation tank was done four times, then 194 parts of a sulfuric acid aqueous solution of pH3 were added and stirred at 25°C for 5 minutes, and then the water was drained from the coagulation tank to perform acid cleaning once, and thereafter, 194 parts of pure water were added, and perform pure water washing once, and the properties of the acrylic rubber (G) were evaluated. The results are shown in Table 2.

[Comparative Example 3]

An acrylic rubber (H) was obtained in the same manner as in Comparative Example 1 except that the emulsifier was changed to 2.5 parts of tridecyloxyhexaoxyethylene phosphate and 0.5 part of polyoxyethylene dodecyl ether (molecular weight 1500), the coagulant liquid was changed to a 0.7% sodium sulfate aqueous solution, and the washing of the hydrous crumbs is changed to washing by pure water (25°C) once, and the properties of the acrylic rubber (H) were evaluated. The results are shown in Table 2. In this Example 3, a large quantity of solid contents adhered to the emulsion polymerization tank and the coagulation tank while performing this method, so that the recovery rate (the polymerization conversion rate) of the polymer with respect to the monomer component was 72%, which was very poor.

[Table 2]

| | | Example 1 (A) | Example 2 (B) | Example 3 (C) | Example 4 (D) | Example 5 (E) | Comparative Example 1 (F) | Comparative Example 2 (G) | Comparative Example 3 (H) |
|---|---|---|---|---|---|---|---|---|---|
| Type of Acrylic Rubber | | | | | | | | | |
| | Reactive group type | Carboxyl Group | Epoxy Group | Chlorine | Chlorine | Chlorine | Chlorine | Chlorine | Chlorine |
| | Reactive group content (%) | 0.34 | 0.36 | 0.27 | 0.27 | 0.26 | 0.28 | 0.26 | 0.26 |
| Monomeric unit Composition of Acrylic Rubber (%) | | | | | | | | | |
| | Ethyl acrylate | 48.25 | 28 | 42.2 | 42.2 | 42.2 | 42.2 | 42.2 | 42.2 |
| | n-butyl acrylate | 50 | 38 | 35 | 35 | 35 | 35 | 35 | 35 |
| | Methoxyethyl acrylate | | 27 | 20 | 20 | 20 | 20 | 20 | 20 |
| | Acrylonitrile | - | 5 | 1.5 | 1.5 | 1.5 | 1.5 | 1.5 | 1.5 |
| | Mono-n-butyl fumarate | 1.75 | - | - | | | - | - | |
| | Allyl glycidyl ether | - | 2 | - | - | - | - | - | |
| | Chlorovinyl acetate | - | - | 1.3 | 1.3 | 1.3 | 1.3 | 1.3 | 1.3 |
| Emulsifier (Parts) | | | | | | | | | |
| | Octyloxydioxyetylene phosphate ester sodium salt | 1.8 | - | - | - | - | - | - | - |
| | Nonylphenyloxyhexaoxyethylene phosphate ester sodium salt | - | 1.8 | - | - | - | - | - | - |
| | Tridecyloxyhexaoxyethylene phosphate ester sodium salt | - | | 1.8 | 1.8 | 1.8 | 1.8 | | |
| | Tridecyloxyhexaoxyethylene phosphate ester | - | - | - | - | - | - | - | 2.5 |
| | Lauryl sulfate sodium salt | - | - | - | - | - | - | 0.709 | - |
| | Polyoxyethylene dodecyl ether | - | - | - | - | - | - | 1.82 | 0.5 |

| Coagulation Process | | | | | | | | | |
|---|---|---|---|---|---|---|---|---|---|
| | Coagulant | $MgSO_4$ | $MgSO_4$ | $MgSO_4$ | $MgSO_4$ | $MgSO_4$ | $MgSO_4$ | $Na_2SO_4$ | $Na_2SO_4$ |
| | Coagulant concentration (%) | 2 | 2 | 2 | 2 | 0.7 | 0.7 | 0.7 | 0.7 |
| | Method of addition 1 | Lx ↓ | Lx ↓ | Lx ↓ | Lx ↓ | Lx ↓ | Coa ↓ | Coa ↓ | Coa ↓ |
| | Stirring speed (rpm) | 600 | 600 | 600 | 100 | 100 | 100 | 100 | 100 |
| | Peripheral speed (m/s) | 3.1 | 3.1 | 3.1 | 0.5 | 0.5 | 0.5 | 0.5 | 0.5 |
| Hydrous Crumbs Size Distribution (Ratio) (%) | | | | | | | | | |
| | >9,5mm (Not Pass 9.5mm) | 0 | 0 | 0 | 0 | 0 | 20 | 0 | 65 |
| | 6.7~9.5mm (Not Pass 6.7mm Pass 9.5mm) | 0 | 0 | 0 | 0 | 0 | 56 | 0 | 18 |
| | 4,75~6.7mm (Not Pass 4.75mm Pass 6.7mm) | 0 | 3 | 0 | 14 | 36 | 14 | 36 | 0 |
| | 3.35~4.75mm (Not Pass 3.35mm Pass 4.75mm) | 3 | 16 | 8 | 42 | 38 | 3 | 38 | 0 |
| | 2.36~3.35mm (Not Pass 2.36mm Pass 3.35mm) | 50 | 42 | 47 | 36 | 16 | 0 | 16 | 0 |
| | 710 $\mu$m~2.36mm (Not Pass 710 $\mu$m Pass 2.36mm) | 40 | 28 | 38 | 7 | 9 | 0 | 9 | 2 |
| | 425 $\mu$m~710 $\mu$m (Not Pass 425 $\mu$m Pass 710 $\mu$m) | 7 | 11 | 7 | 1 | 1 | 5 | 1 | 12 |
| | <425 $\mu$m (Pass 425 $\mu$m) | 0 | 0 | 0 | 0 | 0 | 2 | 0 | 3 |
| Washing Process | | | | | | | | | |
| | Water temperature (°C) | 70 | 70 | 70 | 70 | 70 | 70 | 25 | 25 |
| | Number of washings | 2 | 2 | 2 | 2 | 2 | 2 | 4+1+1 | 1 |
| Dehydration Process | | No | No | No | No | No | No | No | No |

EP 4 001 318 A1

(continued)

| Ash Properties of Acrylic Rubber | | | | | | | | | | |
|---|---|---|---|---|---|---|---|---|---|---|
| | Ash Content (%) | | 0,23 | 0.23 | 0.25 | 0.38 | 0.44 | 1.35 | 0.29 | 1.58 |
| | Ash Content | | | | | | | | | |
| | | P (ppm) | 1170 | 1210 | 1180 | 1396 | 1150 | 2500 | 15 | 3500 |
| | | Mg (ppm) | 767 | 810 | 850 | 1207 | 1385 | 4000 | 10 | 56 |
| | | Na (ppm) | 58 | 116 | 133 | 263 | 187 | 296 | 1390 | 5000 |
| | | Ca (ppm) | 5 | 9 | 3 | 11 | 18 | 15 | 20 | 34 |
| | | S (ppm) | 266 | 145 | 266 | 798 | 1435 | 6000 | 1200 | 7000 |
| | | P+Mg (% in ash) | 83 | 86 | 82 | 69 | 58 | 48 | 1 | 23 |
| | | Mg/P (ratio) | 0.66 | 0.67 | 0.72 | 0.86 | 1.20 | 1.60 | 0.67 | 0.02 |
| Property Values of Acrylic Rubber | | | | | | | | | | |
| | Gel amount (%) | | 64.3 | 58.7 | 64.8 | 75.8 | 66.9 | 78.9 | 70.5 | 85 |
| | Water content (%) | | 0.4 | 0.4 | 0.4 | 0.4 | 0.4 | 0.4 | 0.4 | 0.4 |
| | | Mooney viscosity (ML1+4, 100°C) | 34 | 34 | 34 | 34 | 34 | 34 | 34 | 34 |
| Property Evaluation of Acrylic Rubber | | | | | | | | | | |
| | Storage Stability (45°C × 80%RH × 7days) | | | | | | | | | |
| | | Water contecnt change rate (index) | 33 | 33 | 33 | 44 | 56 | 89 | 100 | 122 |
| | | Mooney scoach minimum viscosity (Vm) change rate (index) 2 | (7%) | (5%) | 29 | 29 | 39 | 81 | 100 | - |
| | Wate resistance test (85°C × 100hrs) volume change rate (index) | | 8.5 | 8 | 19 | 41 | 54 | 200 | 100 | 400 |

※1 In the table, Lx ↓ indicates that the emulsion polymerization liquid was added to the coagulant liquid, and Coa ↓ indicates that the coagulant liquid was added to the emulsion polymerization liquid.

※2 Examples 1 and 2 show not the index but the rate of change.

From Table 2, it can be understood that the acrylic rubbers (A) to (E) according to the present invention, comprising: a bonding unit derived from at least one (meth) acrylic acid ester selected from the group consisting of (meth) acrylic acid alkyl ester and (meth) acrylic acid alkoxyalkyl ester in the amount of 70 to 99.9% by weight; a bonding unit derived from a reactive monomer in the amount of 0.1 to 10% by weight; and a bonding unit derived from another monomer in the amount of 0 to 20% by weight, wherein ash content is 0.5% by weight or less, a total amount of magnesium and phosphorus in the ash is 30% by weight or more with respect to the total ash content, a ratio of the magnesium to the phosphorus ([Mg] / [P]) by weight is in the range of 0.4 to 2.5, and a Mooney viscosity (ML1+4,100°C) of the rubber is 10 to 150, are remarkably excellent in water resistance (Comparison between Examples 1 to 5 and Comparative Examples 1 to 3).

Further, from Table 2, it can be understood that the hydrous crumbs generated in the coagulation process according to the present invention have almost no huge crumbs (9.5 mm or more and 6.7 mm or more) and micro crumbs (425 ($\mu$m or less), and they are focused on a crumb diameter of 425 $\mu$m to 4.75 mm, and the ash content can be sufficiently reduced even by washing with hot water twice (Examples 1-5). In addition, it can be understood that, in the coagulation reaction performed by adding the emulsion polymerization liquid to the stirred coagulant liquid, the ash content of the hydrous crumbs can be remarkably reduced, by more vigorously stirring the coagulant liquid (comparison between Examples 1 to 3 and Examples 4 to 5), and the ash content of the hydrous crumbs can be remarkably reduced by increasing the concentration of the coagulant in the coagulant liquid (comparison between Examples 4 and 5).

From the magnesium (Mg) content shown in Table 2, it can be understood that the magnesium content sharply decreases when particle size of the generated hydrous crumbs are focused in a specific region by changing a coagulation method, while, on the other hand, the phosphorus content decreases to a certain content but does not decrease any more (Comparison between Examples 1 to 5 and Comparative Example 1). From this fact, it can be speculated that magnesium, which is derived from the coagulant (magnesium sulfate), exists outside of the hydrous crumbs so that it can be removed by washing, however, on the other hand, phosphorus, which is derived from the emulsifier (divalent phosphate ester sodium salt), exists inside of the hydrous crumbs so that it cannot be removed by washing only. Further, from the fact that considerable amount of sulfur and sodium derived from magnesium and phosphorus counter anions can be decreased by washing only, it can be imagined that the divalent phosphate sodium ester salt of the emulsifier was salt-exchanged and was inherently present as a hardly soluble magnesium salt of divalent phosphoric acid.

On the other hand, it can be understood that in the case that the coagulation reaction is performed by adding the coagulant liquid to the emulsion polymerization liquid, when the coagulation agent concentration of the coagulant liquid is low, the generated hydrous crumbs include large amount of huge crumbs having crumb diameter of 6.7 mm or more or 9.5 mm or more and micro crumbs having crumb diameter of 425 $\mu$m or smaller, so that the ash content in the acrylic rubber cannot be reduced (Comparative Example 1). Further, it can be understood that when a sulfuric acid-based emulsifier is used as an emulsifier rather than a phosphoric acid ester-based emulsifier (divalent phosphate ester salt), crumb generation can be more stable in the coagulation reaction and the ash content can be reduced (Comparative Example 2), but the water resistance of the acrylic rubber is remarkably more excellent when the phosphoric acid ester-based emulsifier (divalent phosphate ester salt) is used (Comparison between Examples 1 to 5 and Comparative Example 2). Furthermore, it can be understood that when a phosphoric acid ester-based emulsifier (divalent phosphate ester salt) which is not a metal salt was used as the emulsifier and a monovalent sodium sulfate was used as a coagulant, the stability of the emulsion in the polymerization reaction and the coagulation reaction was poor, and a large amount of huge particles and micro particles were generated, so that the water resistance of the acrylic rubber to be obtained was significantly degraded (Comparative Example 3).

Still further, from Table 2, it can be understood that the acrylic rubbers (A) to (E) according to the present invention, in which ash content is decreased and the ash component content is in a specific range, are excellent also in storage stability (Comparison between Examples 1 to 5 and Comparative Examples 1 to 3). In addition, since the Mooney Scorch minimum viscosity change rate which is the storage stability cannot be compared unless the reactive groups are the same, Examples 3 to 5 and the Comparative Examples 1 to 3 in which the reactive group is a chlorine atom are compared by an index, but Examples 1 and 2 having different reactive groups are shown in real values. In any case, it can be understood that the acrylic rubbers (A) to (E) according to the present invention are remarkably excellent also in storage stability.

[Example 6]

The processes from emulsion polymerization to the process of washing the hydrous crumbs were performed in the same manner as in Example 1 to produce hydrous crumbs similar to those in Example 1, and then the washed hydrous crumbs (hydrous crumbs temperature 65°C) were supplied to a screw-type extruder to dehydrate and dry the hydrous crumbs, so that an acrylic rubber (J) was extruded.

The screw-type extruder used in this Example 6 is constituted by one supply barrel, three dehydration barrels (first to third dehydration barrels), and five drying barrels (first to fifth drying barrels). The first dehydration barrel is configured to perform drainage, while the second and third dehydration barrels are configured to perform steam exhausting. The operating conditions of the screw-type extruder were as follows.

Water Content:

- Water content of hydrous crumbs after drainage in the first dehydration barrel: 30%
- Water content of hydrous crumbs after steam exhausting in the third dehydration barrel: 10%
- Water content of hydrous crumbs after drying in the fifth drying barrel: 0.4%

Rubber Temperature:

- Temperature of the hydrous crumbs supplied to the supply barrel: 65°C
- Temperature of the rubber discharged from the screw-type extruder: 140°C

Set Temperature of Each Barrel:

- First dehydration barrel: 100°C
- Second dehydration barrel: 120°C
- Third dehydration barrel: 120°C
- First drying barrel: 120°C
- Second drying barrel: 130°C
- Third drying barrel: 140°C
- Fourth drying barrel: 160°C
- Fifth drying barrel: 180°C

Operating Conditions:

- Screw diameter (D): 132 mm
- Total length of screw (L): 4620 mm
- L/D: 35
- Screw rotation speed: 135 rpm
- Extrusion rate of rubber from die: 700 kg / hr
- Resin pressure in the die: 2 MPa

Reactive group content, ash content, ash component content, gel amount, pH, glass transition temperature (Tg), water content, molecular weight, molecular weight distribution, complex viscosity, and Mooney viscosity (ML1+4,100°C) of the acrylic rubber (J) obtained by the above-described method, were measured and shown in Table 3. Further, the storage stability test of the acrylic rubber (J) was conducted to obtain the rate of change in water content of the acrylic rubber, and the results are shown in Table 3.

Then, using a Banbury mixer, 100 parts of the acrylic rubber (J) (each of before and after the storage stability test) and the compounding agent A of "Composition 1" shown in Table 1 were added and mixed at 50°C for 5 minutes (first stage mixing). Subsequently, the obtained mixture was transferred to a roll at 50°C, compounding agent B of "Composition 1" was compounded and mixed (second-stage mixing), thereby to obtain a rubber mixture.

Thereafter, the rubber mixture obtained by using the acrylic rubber (J) before the storage stability test was put into a mold having a length of 15 cm, a width of 15 cm, and a depth of 0.2 cm, and a primary cross-linking was performed by pressurizing at a pressure of 10 MPa while pressing for 10 minutes at 180°C, and then a secondary cross-linking was performed by further heating the obtained primary cross-linked product in a gear-type oven for 2 hours at 180°C, thereby to obtain a sheet-shaped rubber cross-linked product. Then, a water resistance test was conducted by cutting out a test piece of 3 cm × 2 cm × 0.2 cm from the obtained sheet-shaped rubber cross-linked product, and the results are shown in Table 3.

[Example 7]

An acrylic rubber (K) was produced in the same manner as in Example 6 except that the monomer component was changed to 28 parts of ethyl acrylate, 38 parts of n-butyl acrylate, 27 parts of methoxyethyl acrylate, 5 parts of acrylonitrile and 2 parts of allyl glycidyl ether, and the emulsifier was changed to nonylphenylhexaoxyethylene phosphate sodium salt, and the respective property values of the acrylic rubber (K) (however, the compounding agent was changed to "Composition 2") were measured and shown in Table 3.

[Example 8]

An acrylic rubber (L) was obtained in the same manner as in Example 6 except that the monomer component was changed to 42.2 parts of ethyl acrylate, 35 parts of n-butyl acrylate, 20 parts of methoxyethyl acrylate, 1.5 parts of acrylonitrile and 1.3 parts of vinyl chloroacetate, and the emulsifier was changed to tridecyloxyhexaoxyethylene phosphate sodium salt, and the respective properties of the acrylic rubber (L) (however, the compounding agent was changed to "Composition 3") were evaluated and shown in Table 3.

[Example 9]

An acrylic rubber (M) was obtained in the same manner as in Example 6 except that the drainage was performed in the first and the second dehydration barrels with the temperature of the first dehydration barrel changed to 90°C and the temperature of the second dehydration barrel changed to 100°C, and the water content of the hydrous crumbs after the drainage in the second dehydration barrel was changed to 20%, and the respective properties of the acrylic rubber (M) were evaluated and shown in Table 3.

[Example 10]

An acrylic rubber (N) was produced in the same manner as in Example 9 except that the monomer component was changed to 4.5 parts of ethyl acrylate, 64.5 parts of n-butyl acrylate, 29.5 parts of methoxyethyl acrylate and 1.5 parts of mono-n-butyl fumarate, and the emulsifier was changed to nonylphenyloxyhexaoxyethylene phosphate sodium salt, and the respective properties of the acrylic rubber (N) (provided that the compounding agent was changed to "Composition 4") were evaluated and shown in Table 3.

[Example 11]

An acrylic rubber (O) was produced in the same manner as in Example 10 except that the monomer component was changed to 74.5 parts of ethyl acrylate, 17 parts of n-butyl acrylate, 7 parts of methoxyethyl acrylate and 1.5 parts of mono-n-butyl fumarate, and the emulsifier was changed to tridecyloxyhexaoxyethylene phosphate sodium salt, and the respective properties of the acrylic rubber (O) were evaluated and shown in Table 3.

[Table 3]

| | | Example 6 | Example 7 | Example 8 | Example 9 | Example 10 | Example 11 |
|---|---|---|---|---|---|---|---|
| Types of Acrylic Rubber | | (J) | (K) | (L) | (M) | (N) | (O) |
| | Reactive group type | Carboxyl Group | Epoxy Group | Chlorine | Carboxyl Group | Carboxyl Group | Carboxyl Group |
| | Reactive group content (%) | 0.35 | 0.37 | 0.27 | 0.34 | 0.3 | 0.31 |
| Monomeric unit Composition of Acrylic Rubber (%) | | | | | | | |
| | Ethyl acrylate | 48.25 | 28 | 42.2 | 48.25 | 4.5 | 74.5 |
| | n-butyl acrylate | 50 | 38 | 35 | 50 | 64.5 | 17 |
| | Methoxyethyl acrylate | - | 27 | 20 | - | 29.5 | 7 |
| | Acrylonitrile | - | 5 | 1.5 | - | - | - |
| | Mono-n-butyl fumarate | 1.75 | - | - | 1.75 | 1.5 | 1.5 |
| | Allyl glycidyl ether | - | 2 | - | - | - | - |
| | Chlorovinyl acetate | - | - | 1.3 | - | - | - |
| Emulsifier (Parts) | | | | | | | |
| | Octyloxydioxyetylene phosphate ester sodium salt | 1.8 | - | - | 1.8 | - | - |
| | Nonylphenyloxyhexaoxyethylene phosphate ester sodium salt | - | 1.8 | - | - | 1.8 | - |
| | Tridecyloxyhexaoxyethylene phosphate ester sodium salt | - | - | 1.8 | - | - | 1.8 |
| Coagulation Process | | | | | | | |
| | Coagulant | $MgSO_4$ | $MgSO_4$ | $MgSO_4$ | $MgSO_4$ | $MgSO_4$ | $MgSO_4$ |
| | Coagulant concentration (%) | 2 | 2 | 2 | 2 | 2 | 2 |
| | Mathod of addtion | Lx ↓ | Lx ↓ | Lx ↓ | Lx ↓ | Lx ↓ | Lx ↓ |
| | Stirring speed (rpm) | 600 | 600 | 600 | 600 | 600 | 600 |
| | Peripheral speed (m/s) | 3.1 | 3.1 | 3.1 | 3.1 | 3.1 | 3.1 |
| Washing Process | | | | | | | |
| | Water temperature (°C) | 70 | 70 | 70 | 70 | 70 | 70 |
| | Number of washings | 2 | 2 | 2 | 2 | 2 | 2 |
| Dehydration Process | | Yes | Yes | Yes | Yes | Yes | Yes |

(continued)

| Washing Process | | | | | | | |
|---|---|---|---|---|---|---|---|
| Water content (%) after dehydration (drainage) | | 20 | 20 | 20 | 30 | 30 | 30 |
| Ash Properties of Acrylic Rubber | | | | | | | |
| Ash Content (%) | | 0.10 | 0.11 | 0.09 | 0.17 | 0.17 | 0.17 |
| Ash Content | P (ppm) | 511 | 644 | 520 | 865 | 862 | 890 |
| | Mg (ppm) | 348 | 360 | 273 | 601 | 599 | 561 |
| | Na (ppm) | 66 | 44 | 28 | 66 | 76 | 99 |
| | Ca (ppm) | 5 | 4 | 7 | 6 | 5 | 3 |
| | S (ppm) | 4 | 3 | 21 | 63 | 59 | 56 |
| | P+Mg (% in ash) | 86 | 91 | 88 | 87 | 85 | 86 |
| | Mg/P (ratio) | 0.68 | 0.56 | 0.53 | 0.69 | 0.69 | 0.63 |
| Property Values of Acrylic Rubber | | | | | | | |
| Gel amount(%) | | 1.2 | 1.8 | 2.1 | 2.2 | 3.7 | 1.5 |
| pH | | 4.7 | 5 | 4.5 | 4.8 | 5.0 | 4.8 |
| Tg(°C) | | -20 | -39 | -28 | -28 | -26 | -28 |
| Water content (%) | | 0.4 | 0.4 | 0.4 | 0.3 | 0.3 | 0.3 |
| Mw/1000 | | 1610 | 1380 | 1450 | 1520 | 1410 | 1450 |
| Mz/Mw | | 1.8 | 1.69 | 1.79 | 1.75 | 1.68 | 1.79 |
| Complex viscosity ratio ($[\eta]$ 60°C/$[\eta]$ 100°C) | | 1.21 | 1.08 | 1.15 | 1.14 | 1.19 | 1.15 |
| Complex viscosity ratio ($[\eta]$ 100°C/$[\eta]$ 60°C) | | 0.83 | 0.93 | 0.87 | 0.88 | 0.84 | 0.87 |
| Complex viscosity $\eta$ (100°C)(Pa·s) | | 3053 | 3124 | 3150 | 3081 | 2989 | 3150 |
| Complex viscosity $\eta$ (60°C)(Pa·s) | | 3689 | 3360 | 3620 | 3520 | 3572 | 3620 |
| Mooney viscosity (ML 1+4, 100°C) | | 40 | 33 | 33 | 34 | 33 | 33 |

(continued)

| Property Evaluation of Acrylic Rubber | | | | | | | |
|---|---|---|---|---|---|---|---|
| | Storage stability(45°C × 80%RH × 7days) Water content change rate (index) | 20 | 20 | 20 | 8 | 10 | 9 |
| | Water resistance test (85°C × 100hr) Volume change rate (index) | 6.2 | 5.2 | 9.6 | 1.9 | 2.5 | 2.6 |

※ In the table, Lx 1 indicates that the emulsion polymerization liquid was added to the coagulant liquid, and Coa ↓ indicates that the coagulant liquid was added to the emulsion polymerization liquid.

It can be understood that the acrylic rubbers (J) to (O) of the present invention described in Table 3 have further improved water resistance and storage stability, and are very excellent in practicality, even in comparison with the acrylic rubbers (A) to (E) described in Table 2 (Comparison between Examples 6-11 and Examples 1-5).

From the results of Examples 6 to 11 in Table 3, it can be understood that the acrylic rubbers (J) to (O) of the present invention, obtained by dehydrating to water content of 1 to 40%, preferably 10 to 35%, by a dehydration barrel, thereafter drying with a drying barrel to a water content of less than 1%, and then extruding the dry rubber from a die, using a screw-type extruder provided with the dehydration barrel having a dehydration slit, the drying barrel that performs the drying under reduced pressure, and the die at the tip, are much more excellent in water resistance and storage stability (comparison between Examples 6 to 11 and Examples 1 to 5).

It can be understood that Examples 6 to 11 in Table 3 were added with the dehydration process compared to Examples 1-5 in Table 2, because of which, the ash of magnesium and phosphorus that could not be sufficiently removed in the washing process was significantly reduced, and it can be understood that, compared to Examples 6 to 8 in which dehydration (drainage) was performed up to water content of 30%, Examples 9 to 11 in which dehydration (drainage) was performed up to water content of 20% have a lower residual ash content and are significantly more excellent in water resistance and storage stability.

Further, when comparing Table 2 and Table 3, it can be understood that the acrylic rubbers (J) to (O) of the present invention, obtained by dehydrating to water content of 1 to 40%, preferably 10 to 35%, by a dehydration barrel, thereafter drying with a drying barrel to a water content of less than 1%, and then extruding the dry rubber from a die, using a screw-type extruder provided with the dehydration barrel having a dehydration slit, the drying barrel that performs the drying under reduced pressure, and the die at the tip, in the dehydration process of dehydrating the hydrous crumb and the drying process of drying the hydrous crumb, have an extremely reduced amount of gel insoluble in methyl ethyl ketone, and are excellent in the effect of water resistance and storage stability according to the present invention and are excellent in processability in Banbury kneading, although data is not shown in the present specification.

From Table 3, it can further be understood that the acrylic rubbers (J) to (O) of the present invention have a weight average molecular weight (Mw) of more than 1,000,000, and a ratio (Mz / Mw) of Z-average molecular weight (Mz) of a molecular weight distribution with an emphasis on high molecular weight and the weight average molecular weight (Mw) greatly exceeds 1.3, a ratio ($[\eta]$ 100°C / $[\eta]$ 60°C) of the complex viscosity ($[\eta]$ 100°C) at 100°C and the complex viscosity ($[\eta]$ 60°C) at 60°C exceeds 0.8, and the Mooney viscosity (ML1+4,100°C) is in the range of 10 to 150, and the strength properties and processability are highly well-balanced.

[Examples 12 to 14]

The hydrous crumbs (hydrous crumbs temperature 65°C) obtained by performing emulsion polymerization, coagulation and washing in the same manner as in Examples 9 to 11 were supplied to a screw-type extruder having a substantially rectangular die, then the hydrous crumbs were dehydrated, dried, and molded on the same conditions as Examples 9 to 11, and the sheet-shaped dry rubber having a width of 300 mm and a thickness of 10 mm was extruded. Then, the sheet-shaped dry rubber was cooled at a cooling rate of 200°C/hr by using a conveying-type cooling device directly connected to the screw-type extruder to obtain sheet-shaped acrylic rubbers (P) to (R), and thereafter sheet-shaped acrylic rubbers (P) to (R) were cooled to 50°C, cut with a cutter, and laminated so to become 20 parts (20 kg) before cooled down to 40°C or less, to obtain bale-shaped acrylic rubbers (P) to (R).

When the specific gravities of the obtained sheet-shaped acrylic rubbers (P) to (R) and bale-shaped acrylic rubbers (P) to (R) were measured, the measured values of the respective sheet-shaped acrylic rubbers and the bale-shaped acrylic rubbers were almost the same: the specific gravity of the sheet-shaped acrylic rubber and bale-shaped acrylic rubber (P) was "1.120"; the specific gravity of the sheet-shaped acrylic rubber and the bale-shaped acrylic rubber (Q) was "1.098", and the specific gravity of the sheet-shaped acrylic rubber and the bale-shaped acrylic rubber (R) was "1.118". In each case, the sheet-shaped acrylic rubbers and bale-shaped acrylic rubbers (P) to (R) in which air entrapment was small were obtained.

When reactive group content, ash content, ash component content, amount of gel insoluble in methyl ethyl ketone, pH, glass transition temperature (Tg), water content, molecular weight, molecular weight distribution and complex viscosity of the obtained sheet-shaped acrylic rubbers and bale-shaped acrylic rubbers (P) to (R) were measured, the measured values were almost the same as those of the corresponding acrylic rubbers (M) to (O).

When storage stability and water resistance of the obtained sheet-shaped acrylic rubbers and bale-shaped acrylic rubbers (P) to (R) were evaluated in the same manner as in Examples 9 to 11, the storage stability and water resistance of the obtained sheet-shaped acrylic rubbers and bale-shaped acrylic rubbers (P) to (R) were excellent as in the corresponding acrylic rubbers (A) to (C), and particularly, the storage stability was "< 7", which was superior to the corresponding acrylic rubbers (A) to (C).

[EXPLANATION OF REFERENCE NUMERALS]

1 Acrylic Rubber Production System
3 Coagulation Device
4 Washing Device
5 Screw-Type Extruder

**Claims**

1.  An acrylic rubber comprising:

    a bonding unit derived from at least one (meth) acrylic acid ester selected from the group consisting of (meth) acrylic acid alkyl ester and (meth) acrylic acid alkoxyalkyl ester in an amount of 70 to 99.9% by weight;
    a bonding unit derived from a reactive monomer in an amount of 0.1 to 10% by weight; and
    a bonding unit derived from another monomer in an amount of 0 to 20% by weight, wherein
    an ash content is 0.5% by weight or less,
    a total amount of magnesium and phosphorus in the ash is 30% by weight or more with respect to the total ash content,
    a ratio of the magnesium to the phosphorus ([Mg] / [P]) by weight is in the range of 0.4 to 2.5,
    and a Mooney viscosity (ML1+4,100°C) of the rubber is 10 to 150.

2.  The acrylic rubber according to claim 1, wherein the ash content is 0.0001 to 0.4% by weight.

3.  The acrylic rubber according to claim 1 or 2, wherein a ratio of the magnesium to the phosphorus ([Mg] / [P]) in the ash is in the range of 0.45 to 1.2.

4.  The acrylic rubber according to any one of claims 1 to 3, wherein a glass transition temperature (Tg) is 20°C or lower.

5.  The acrylic rubber according to any one of claims 1 to 4, wherein a complex viscosity ([η] 60°C) at 60°C is 15,000 Pa·s or less.

6.  The acrylic rubber according to any one of claims 1 to 5, wherein a ratio ([η] 100°C / [η] 60°C) of the complex viscosity ([η] 100°C) at 100°C and the complex viscosity ([η] 60°C) at 60°C is 0.5 or more.

7.  The acrylic rubber according to any one of claims 1 to 6, wherein a ratio ([η] 100°C / [η] 60°C) of the complex viscosity ([η] 100°C) at 100°C and the complex viscosity ([η] 60°C) at 60°C is 0.8 or more.

8.  The acrylic rubber according to any one of claims 1 to 7, wherein an amount of gel insoluble in methyl ethyl ketone is 50% by weight or less.

9.  The acrylic rubber according to any one of claims 1 to 8, wherein an amount of gel insoluble in methyl ethyl ketone is 10% by weight or less.

10. The acrylic rubber according to any one of claims 1 to 9, wherein a water content is less than 1% by weight.

11. The acrylic rubber according to any one of claims 1 to 10, wherein pH is 6 or less.

12. The acrylic rubber according to any one of claims 1 to 11, wherein the acrylic rubber is sheet-shaped or bale-shaped.

13. The acrylic rubber according to any one of claims 1 to 12, wherein a specific gravity is 0.8 or more.

14. A method for producing an acrylic rubber, the method comprising:

    an emulsion polymerization process to obtain an emulsion polymerization liquid by emulsifying, with water and a divalent phosphate ester salt, a monomer component containing at least one (meth) acrylic acid ester selected from the group consisting of (meth) acrylic acid alkyl ester and (meth) acrylic acid alkoxyalkyl ester, a reactive monomer, and other copolymerizable monomer as necessary, and by emulsion-polymerizing the emulsified monomer liquid in the presence of a polymerization catalyst;

a coagulation process to generate hydrous crumbs by adding the obtained emulsion polymerization liquid into an aqueous solution of a magnesium salt being stirred;

a washing process to wash the generated hydrous crumbs with hot water; and

a drying process to dry the washed hydrous crumbs.

15. The method for producing an acrylic rubber according to claim 14, further comprising a dehydration process, after the washing process, to dehydrate the washed hydrous crumbs to a water content of 1 to 50% by weight.

16. The method for producing an acrylic rubber according to claim 15, wherein a water content of the hydrous crumbs after the dehydration is in the range of 3 to 40% by weight.

17. The method for producing an acrylic rubber according to any one of claims 14 to 16, wherein a rotation speed of the stirred magnesium salt aqueous solution is 100 rpm or higher.

18. The method for producing an acrylic rubber according to any one of claims 14 to 17, wherein a peripheral speed of the magnesium salt aqueous solution being stirred is 0.5 m/s or higher.

19. The method for producing an acrylic rubber according to any one of claims 14 to 18, wherein a peripheral speed of the magnesium salt aqueous solution being stirred is 1.5 m/s or higher.

20. The method for producing an acrylic rubber according to any one of claims 14 to 19, wherein the magnesium salt aqueous solution has a magnesium salt concentration of 0.5% by weight or more.

21. The method for producing an acrylic rubber according to any one of claims 14 to 20, wherein sizes of the hydrous crumbs produced in the coagulation process satisfy the following conditions (a) to (e):

(a) the proportion of the hydrous crumbs that do not pass through a JIS sieve having a mesh opening of 9.5 mm is 10% by weight or less;

(b) the proportion of the hydrous crumbs that pass through the JIS sieve having a mesh opening of 9.5 mm and do not pass through a JIS sieve having a mesh opening of 6.7 mm is 30% by weight or less;

(c) the proportion of the hydrous crumbs that pass through the JIS sieve having a mesh opening of 6.7 mm and do not pass through a JIS sieve having a mesh opening of 710 $\mu$m is 20% by weight or more;

(d) the proportion of the hydrous crumbs that pass through the JIS sieve having a mesh opening of 710 $\mu$m and do not pass through a JIS sieve having a mesh opening of 425 $\mu$m is 30% by weight or less; and

(e) the proportion of the hydrous crumbs that pass through the JIS sieve having a mesh opening of 425 $\mu$m is 10% by weight or less.

22. The method for producing an acrylic rubber according to any one of claims 14 to 21, wherein the dehydration process and the drying process are performed with a screw-type extruder provided with a dehydration barrel having a dehydration slit, a drying barrel for drying under reduced pressure, and a die at a tip thereof, by dehydrating the hydrous crumbs at the dehydration barrel until the water content is 1 to 40% by weight; thereafter drying the hydrous crumbs at the drying barrel until the water content is 1% by weight or less; and then extruding the dry rubber from the die.

23. A rubber composition containing a rubber component including the acrylic rubber according to any one of claims 1 to 13 and containing a filler and a cross-linking agent.

24. A rubber cross-linked product obtained by cross-linking the rubber composition according to claim 23.

FIG.1

Hydrous Crumbs

FIG.2

**INTERNATIONAL SEARCH REPORT**

| International application No. |
| --- |
| PCT/JP2020/022311 |

**A. CLASSIFICATION OF SUBJECT MATTER**
Int.Cl. C08F6/22(2006.01)i, C08F220/18(2006.01)i, C08L33/08(2006.01)i,
C08F2/26(2006.01)i, C08K3/013(2018.01)i
FI: C08F220/18, C08L33/08, C08K3/013, C08F2/26B, C08F6/22
According to International Patent Classification (IPC) or to both national classification and IPC

**B. FIELDS SEARCHED**

Minimum documentation searched (classification system followed by classification symbols)
Int.Cl. C08F6/22, C08F220/18, C08L33/08, C08F2/26, C08K3/013

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 3949975 B2 (MITSUBISHI RAYON CO., LTD.) 25.07.2007 (2007-07-25), examples | 1-3, 10, 13, 14, 20 |
| Y | | 12, 15-19, 22-24 |
| A | | 4-9, 11, 21 |
| Y | JP 2004-131654 A (ZEON CORPORATION) 30.04.2004 (2004-04-30), paragraphs [0008], [0009] | 12, 15, 16, 22 |
| A | | 1-11, 13, 14, 17-21, 23, 24 |
| Y | JP 2004-143323 A (ZEON CORPORATION) 20.05.2004 (2004-05-20), paragraph [0013] | 17-19 |
| A | | 1-16, 20-24 |
| Y | WO 2018/79783 A1 (ZEON CORPORATION) 03.05.2018 (2018-05-03), claims | 23, 24 |
| A | | 1-22 |

| ☒ Further documents are listed in the continuation of Box C. | ☒ See patent family annex. |
| --- | --- |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 31.07.2020 | 18.08.2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**EP 4 001 318 A1**

International application No.

PCT/JP2020/022311

C (Continuation). DOCUMENTS CONSIDERED TO BE RELEVANT

| Category* | Citation of document, with indication, where appropriate, of the relevant passages | Relevant to claim No. |
|---|---|---|
| A | JP 61-108629 A (MITSUBISHI RAYON CO., LTD.) 27.05.1986 (1986-05-27), entire text | 1-24 |
| A | US 2011/0123748 A1 (LANXESS DEUTSCHLAND GMBH) 26.05.2011 (2011-05-26), entire text | 1-24 |
| A | JP 2012-224765 A (JSR CORPORATION) 15.11.2012 (2012-11-15), entire text, all drawings | 1-24 |
| A | WO 2013/133358 A1 (ZEON CORPORATION) 12.09.2013 (2013-09-12), entire text | 1-24 |
| A | JP 2015-105358 A (NOF CORPORATION) 08.06.2015 (2015-06-08), entire text | 1-24 |

Form PCT/ISA/210 (second sheet) (January 2015)

**INTERNATIONAL SEARCH REPORT**

Information on patent family members

| | International application No. |
|---|---|
| | PCT/JP2020/022311 |

```
JP 3949975 B2        25.07.2007    (Family: none)

JP 2004-131654 A   30.04.2004    (Family: none)

JP 2004-143323 A   20.05.2004    (Family: none)

WO 2018/79783 A1   03.05.2018    EP 3533807 A1
                                 claims
                                 TW 201817800 A
                                 CN 109996819 A
                                 KR 10-2019-0077367 A

JP 61-108629 A      27.05.1986    (Family: none)

US 2011/0123748 A1 26.05.2011    WO 2009/095313 A1
                                 EP 2238177 A1
                                 KR 10-2010-0115779 A
                                 CN 101925614 A

JP 2012-224765 A   15.11.2012    (Family: none)

WO 2013/133358 A1  12.09.2013    US 2015/0099841 A1
                                 entire text
                                 EP 2824140 A1

JP 2015-105358 A   08.06.2015    (Family: none)
```

Form PCT/ISA/210 (patent family annex) (January 2015)

## REFERENCES CITED IN THE DESCRIPTION

**Patent documents cited in the description**

- WO 2018079783 A
- JP S50156559 A
- WO 2018101146 A
- JP 3949975 B